# EUROPEAN PATENT SPECIFICATION

(11) **EP 3 240 671 B1**
(45) Date of publication and mention of the grant of the patent: **16.12.2020**
(21) Application number: 15831114.2
(22) Date of filing: 29.12.2015
(51) Int. Cl.: B29C 67/00, B29C 64/124, B29C 64/106

(54) **THREE-DIMENSIONAL PRINTING OF OBJECTS WITH BREATHING ORIFICES**
DREIDIMENSIONALES DRUCKEN VON OBJEKTEN MIT BELÜFTUNGSÖFFNUNGEN
IMPRESSION EN TROIS DIMENSIONS D'OBJETS COMPRENANT DES ORIFICES DE RESPIRATION

(30) Priority: 31.12.2014 US 201462098719 P
(43) Date of publication of application: 08.11.2017
(73) Proprietor: CARBON, INC., Redwood City, California 94063 (US)
(72) Inventor: MOORE, David, San Carlos, California 94070 (US)
(74) Representative: HGF
(86) International application number: PCT/US2015/067884
(87) International publication number: WO 2016/109550

(56) References cited:
- WO-A1-2012/150497
- WO-A2-2014/126834

## Description

### Field of the Invention

The present invention concerns methods and apparatus for the fabrication of three-dimensional objects from liquid materials, where the objects have a hollow portion.

### Background of the Invention

In conventional additive or three-dimensional fabrication techniques, construction of a three-dimensional object is performed in a step-wise or layer-by-layer manner. In particular, layer formation is performed through solidification of photo curable resin under the action of visible or UV light irradiation. Two techniques are known: one in which new layers are formed at the top surface of the growing object; the other in which new layers are formed at the bottom surface of the growing object.

If new layers are formed at the top surface of the growing object, then after each irradiation step the object under construction is lowered into the resin "pool," a new layer of resin is coated on top, and a new irradiation step takes place. An early example of such a technique is given in Hull, US Patent No. 5,236,637, at Figure 3. A disadvantage of such "top down" techniques is the need to submerge the growing object in a (potentially deep) pool of liquid resin and reconstitute a precise overlayer of liquid resin.

If new layers are formed at the bottom of the growing object, then after each irradiation step the object under construction must be separated from the bottom plate in the fabrication well. An early example of such a technique is given in Hull, US Patent No. 5,236,637, at Figure 4. While such "bottom up" techniques hold the potential to eliminate the need for a deep well in which the object is submerged by instead lifting the object out of a relatively shallow well or pool, a problem with such "bottom up" fabrication techniques, as commercially implemented, is that extreme care must be taken, and additional mechanical elements employed, when separating the solidified layer from the bottom plate due to physical and chemical interactions therebetween. For example, in US Patent No. 7,438,846, an elastic separation layer is used to achieve "non-destructive" separation of solidified material at the bottom construction plane. Other approaches, such as the B9Creator™ 3-dimensional printer marketed by B9Creations of Deadwood, South Dakota, USA, employ a sliding build plate. *See, e.g.,* M. Joyce, US Patent App. 2013/0292862 and Y. Chen et al., US Patent App. 2013/0295212 (both Nov. 7, 2013); *see also* Y. Pan et al., J. Manufacturing Sci. and Eng. 134, 051011-1 (Oct. 2012). Such approaches introduce a mechanical step that may complicate the apparatus, slow the method, and/or potentially distort the end product.

Continuous processes for producing a three-dimensional object are suggested at some length with respect to "top down" techniques in US Patent No. 7,892,474, but this reference does not explain how they may be implemented in "bottom up" systems in a manner non-destructive to the article being produced. Accordingly, there is a need for alternate methods and apparatus for three-dimensional fabrication that can obviate the need for mechanical separation steps in "bottom-up" fabrication.

WO 2012/150497 discloses a method for making three-dimensional objects formed by a plurality of superimposed layers of a fluid photopolymer suited to solidify through polymerization following a stimulating action, comprising the following operations: - making the fluid photopolymer flow on a supporting surface exposed to stimulation in such a way as to define a layer adjacent to the previous layer; - selectively exposing the layer to stimulation in one or more predefined areas; - repeating the step regarding flow and exposure for each successive layer of the three-dimensional object. The method also includes an operation intended to reduce pressure in the environment where the three-dimensional object is manufactured compared to the external atmospheric pressure, prior to said operations regarding flow and exposure.

WO 2014/126834 discloses a method of forming a three-dimensional object by (a) providing a carrier and a build plate, the build plate comprising a semipermeable member, the semipermeable member comprising a build surface with the build surface and the carrier defining a build region therebetween, and with the build surface in fluid communication by way of the semipermeable member with a source of polymerization inhibitor; (b) filling the build region with a polymerizable liquid, the polymerizable liquid contacting the build surface; (c) irradiating the build region through the build plate to produce a solid polymerized region in the build region, while forming or maintaining a liquid film release layer comprised of the polymerizable liquid formed between the solid polymerized region and the build surface, the polymerization of which liquid film is inhibited by the polymerization inhibitor; and (d) advancing the carrier with the polymerized region adhered thereto away from the build surface on the build plate to create a subsequent build region between the polymerized region and the build surface; (e) wherein the carrier has at least one channel formed therein, and the filling step is carried out by passing or forcing the polymerizable liquid into the build region through the at least one channel.

### Summary of the Invention

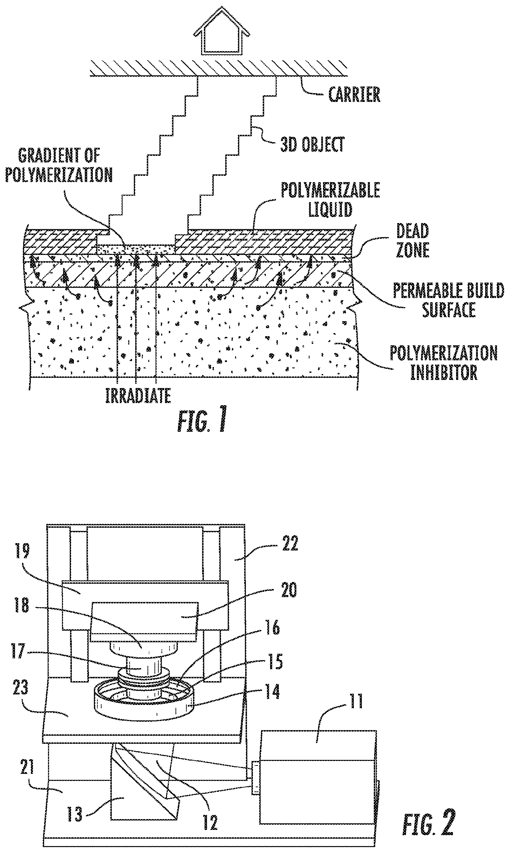

Described herein are methods, systems and apparatus (including associated control methods, systems and apparatus), for the production of a three-dimensional object by additive manufacturing. In preferred (but not necessarily limiting) embodiments, the method is carried out continuously. In preferred (but not necessarily limiting) embodiments, the three-dimensional object is produced from a liquid interface. Hence they are sometimes referred to, for convenience and not for purposes of limitation, as "continuous liquid interphase printing." A schematic representation is given in **Figure** 1 herein.

In the present invention, a portion of the three dimensional object is hollow: That is, the object has a circumferential wall and an internal cavity contained within that wall. The wall has an upper portion and a lower portion. The method includes the step of forming a breathing orifice in the wall (preferably in the wall upper portion) while forming the three-dimensional object.

Preferably the filling, irradiating, and/or advancing steps are carried out while also concurrently: (i) continuously maintaining a dead zone of polymerizable liquid in contact with said build surface, and (ii) continuously maintaining a gradient of polymerization zone between said dead zone and said solid polymer and in contact with each thereof, said gradient of polymerization zone comprising said polymerizable liquid in partially cured form. The dead zone and gradient of polymerization zone may be maintained through some or all of the formation of the object being made, for example (and in some embodiments) for a time of at least 5, 10, 20, or 30 seconds, and in some embodiments for a time of at least 1 or 2 minutes.

A further aspect of the invention is an apparatus for forming a three-dimensional object from a polymerizable liquid. The apparatus comprises:
(a) a support;
(b) a carrier operatively associated with the support on which carrier the three-dimensional object is formed, the carrier having at least one breathing orifice formed therein;
(c) an optically transparent member having a build surface, with the build surface and the carrier defining a build region therebetween;
(d) a liquid polymer supply *(e.g.,* a well) operatively associated with the build surface and configured to supply liquid polymer into the build region for solidification or polymerization;
(e) a radiation source configured to irradiate the build region through the optically transparent member to form a solid polymer from the polymerizable liquid;
(f) optionally at least one drive operatively associated with either the transparent member or the carrier;
(g) a controller operatively associated with the carrier, and/or optionally the at least one drive, and the radiation source for advancing the carrier away from the build surface to form the three-dimensional object from the solid polymer, wherein: said controller is further configured to vertically reciprocate said carrier with respect to said build surface to enhance or speed the refilling of said build region with said polymerizable liquid.

In some embodiments, the apparatus further comprises a siphon line connected to the breathing orifice and configured to interconnect the breathing orifice with the liquid polymer supply. A priming pump may be included on the siphon line to prime the siphon line.

In some embodiments, the apparatus further comprises a polymerizable liquid supply in fluid communication with the breathing orifice, and a liquid pressure regulator operatively associated with the breathing orifice and the polymerizable liquid supply.

Non-limiting examples and specific embodiments of the present invention are explained in greater detail in the drawings herein and the specification set forth below.

### Brief Description of the Drawings

**Figure 1** is a schematic illustration of one embodiment of a method of the present invention.
**Figure 2** is a perspective view of one embodiment of an apparatus of the present invention.
**Figures 3 to 5** are flow charts illustrating control systems and methods for carrying out the present invention.
**Figure 6** is a top view of 7.62 centimeter (3 inch) by 40.64 centimeter (16 inch) "high aspect" rectangular build plate (or "window") assembly of the present invention, where the film dimensions are 8.89 centimeter (3.5 inch) by 43.18 centimeter (17 inch).
**Figure 7** is an exploded view of the build plate of Figure 6, showing the tension ring and tension ring spring plate.
**Figure 8** is a side sectional view of the build plates of Figures 6-9, showing how the tension member tensions and rigidifies the polymer film.
**Figure 9** is a top view of a 7.32 centimeter (2.88 inch) diameter round build plate of the invention, where the film dimension may be 10.16 centimeter (4 inches) in diameter.
**Figure 10** is an exploded view of the build plate of Figure 8.
**Figure 11** shows various alternate embodiments of the build plates of Figures 7-10.
**Figure 12** is a front perspective view of an apparatus according to an exemplary embodiment of the invention.
**Figure 13** is a side view of the apparatus of **Figure 12****.**
**Figure 14** is a rear perspective view of the apparatus of **Figure 12****.**
**Figure 15** is a perspective view of a light engine assembly used with the apparatus of **Figure 12****.**
**Figure 16** is a front perspective view of an apparatus according to another exemplary embodiment of the invention.
**Figures 17A-17C** are schematic diagrams illustrating tiled images.
**Figure 18** is a front perspective view of an apparatus according to another exemplary embodiment of the invention.
**Figure 19** is a side view of the apparatus of **Figure 18****.**
**Figure 20** is a perspective view of a light engine assembly used with the apparatus of **Figure 18****.**
**Figure 21** is a graphic illustration of a process of the invention indicating the position of the carrier in relation to the build surface or plate, where both advancing of the carrier and irradiation of the build region is carried out continuously. Advancing of the carrier is illustrated on the vertical axis, and time is illustrated on the horizontal axis.
**Figure 22** is a graphic illustration of another process of the invention indicating the position of the carrier in relation to the build surface or plate,, where both advancing of the carrier and irradiation of the build region is carried out stepwise, yet the dead zone and gradient of polymerization are maintained. Advancing of the carrier is again illustrated on the vertical axis, and time is illustrated on the horizontal axis.
**Figure 23** is a graphic illustration of still another process of the invention indicating the position of the carrier in relation to the build surface or plate, where both advancing of the carrier and irradiation of the build region is carried out stepwise, the dead zone and gradient of polymerization are maintained, and a reciprocating step is introduced between irradiation steps to enhance the flow of polymerizable liquid into the build region. Advancing of the carrier is again illustrated on the vertical axis, and time is illustrated on the horizontal axis.
**Figure 24** is a detailed illustration of an reciprocation step of Figure 23, showing a period of acceleration occurring during the upstroke (*i.e.,* a gradual start of the upstroke) and a period of deceleration occurring during the downstroke (*i.e.,* a gradual end to the downstroke).
**Figure 25** is a schematic, side sectional, view of a hollow object being produced without a breathing orifice, and showing the eventual failure of a segment of the wall due to a greater atmospheric pressure on external surfaces of the wall.
**Figure 26** is a schematic, side sectional, view of a hollow object being produced with a breathing orifice formed in the upper wall portion, without failure of any segments of the wall.
**Figure 27** is a perspective view of a hollow object produced with a plurality of breathing orifices formed in the upper wall portion thereof.
**Figure 28A** is a schematic diagram of a hollow object being produced similar to that of Figure 26, except that the breathing orifice is now aligned with a corresponding breathing orifice in the carrier.
**Figure 28B** is a schematic diagram of a hollow object being produced similar to that of Figure 28A, except that the orientation of the object is reversed, so that an open base of the finished object now serves as the breathing orifice aligned with breathing orifice in the carrier.
**Figure 29** is a photograph of a carrier with multiple breathing orifices formed therein.
**Figure 30A** is a photograph of a pair of hollow objects having an open base, the object on the left produced on a carrier without breathing orifices, and the object on the right produced on a carrier as shown in Figure 29.
**Figure 30B** is a close-up photograph of the pair of objects of Figure 30A, showing the defects in the base of the object on the left.
**Figure 30C** is a close-up photograph of the left object shown in Figures 30A and 30B, showing the defects therein.
**Figure 31** is a schematic diagram of a hollow object being produced similar to that of Figure 28A, except that the breathing orifices in the object and carrier are now in fluid communication with a source of polymerizable liquid, through a liquid pressure regulator.
**Figure 32** is a schematic diagram of a hollow object being produced similar to that of Figure 31, except that a siphon now interconnects the breathing orifice with the pool of polymerizable liquid on the build plate surface.

### Detailed Description of Illustrative Embodiments

The present invention is now described more fully hereinafter with reference to the accompanying drawings, in which embodiments of the invention are shown. This invention may, however, be embodied in many different forms and should not be construed as limited to the embodiments set forth herein; rather these embodiments are provided so that this disclosure will be thorough and complete and will fully convey the scope of the invention to those skilled in the art.

Like numbers refer to like elements throughout. In the figures, the thickness of certain lines, layers, components, elements or features may be exaggerated for clarity. Where used, broken lines illustrate optional features or operations unless specified otherwise.

The terminology used herein is for the purpose of describing particular embodiments only and is not intended to be limiting of the invention. As used herein, the singular forms "a," "an" and "the" are intended to include plural forms as well, unless the context clearly indicates otherwise. It will be further understood that the terms "comprises" or "comprising," when used in this specification, specify the presence of stated features, integers, steps, operations, elements components and/or groups or combinations thereof, but do not preclude the presence or addition of one or more other features, integers, steps, operations, elements, components and/or groups or combinations thereof.

As used herein, the term "and/or" includes any and all possible combinations or one or more of the associated listed items, as well as the lack of combinations when interpreted in the alternative ("or").

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the specification and claims and should not be interpreted in an idealized or overly formal sense unless expressly so defined herein. Well-known functions or constructions may not be described in detail for brevity and/or clarity.

It will be understood that when an element is referred to as being "on," "attached" to, "connected" to, "coupled" with, "contacting," etc., another element, it can be directly on, attached to, connected to, coupled with and/or contacting the other element or intervening elements can also be present. In contrast, when an element is referred to as being, for example, "directly on," "directly attached" to, "directly connected" to, "directly coupled" with or "directly contacting" another element, there are no intervening elements present. It will also be appreciated by those of skill in the art that references to a structure or feature that is disposed "adjacent" another feature can have portions that overlap or underlie the adjacent feature.

Spatially relative terms, such as "under," "below," "lower," "over," "upper" and the like, may be used herein for ease of description to describe an element's or feature's relationship to another element(s) or feature(s) as illustrated in the figures. It will be understood that the spatially relative terms are intended to encompass different orientations of the device in use or operation in addition to the orientation depicted in the figures. For example, if the device in the figures is inverted, elements described as "under" or "beneath" other elements or features would then be oriented "over" the other elements or features. Thus the exemplary term "under" can encompass both an orientation of over and under. The device may otherwise be oriented (rotated 90 degrees or at other orientations) and the spatially relative descriptors used herein interpreted accordingly. Similarly, the terms "upwardly," "downwardly," "vertical," "horizontal" and the like are used herein for the purpose of explanation only, unless specifically indicated otherwise.

It will be understood that, although the terms first, second, etc., may be used herein to describe various elements, components, regions, layers and/or sections, these elements, components, regions, layers and/or sections should not be limited by these terms. Rather, these terms are only used to distinguish one element, component, region, layer and/or section, from another element, component, region, layer and/or section. Thus, a first element, component, region, layer or section discussed herein could be termed a second element, component, region, layer or section without departing from the teachings of the present invention. The sequence of operations (or steps) is not limited to the order presented in the claims or figures unless specifically indicated otherwise.

### 1. Polymerizable liquids.

Any suitable polymerizable liquid can be used to enable the present invention. The liquid (sometimes also referred to as "liquid resin" "ink," or simply "resin" herein) can include a monomer, particularly photopolymerizable and/or free radical polymerizable monomers, and a suitable initiator such as a free radical initiator, and combinations thereof. Examples include, but are not limited to, acrylics, methacrylics, acrylamides, styrenics, olefins, halogenated olefins, cyclic alkenes, maleic anhydride, alkenes, alkynes, carbon monoxide, functionalized oligomers, multifunctional cute site monomers, functionalized PEGs, etc., including combinations thereof. Examples of liquid resins, monomers and initiators include but are not limited to those set forth in US Patents Nos. 8,232,043; 8,119,214; 7,935,476; 7,767,728; 7,649,029; WO 2012129968 A1; CN 102715751 A; JP 2012210408 A.

***Acid catalyzed polymerizable liquids.*** While in some embodiments as noted above the polymerizable liquid comprises a free radical polymerizable liquid (in which case an inhibitor may be oxygen as described below), in other embodiments the polymerizable liquid comprises an acid catalyzed, or cationically polymerized, polymerizable liquid. In such embodiments the polymerizable liquid comprises monomers contain groups suitable for acid catalysis, such as epoxide groups, vinyl ether groups, etc.. Thus suitable monomers include olefins such as methoxyethene, 4-methoxystyrene, styrene, 2-methylprop-1-ene, 1,3-butadiene, etc.; heterocycloic monomers (including lactones, lactams, and cyclic amines) such as oxirane, thietane, tetrahydrofuran, oxazoline, 1,3, dioxepane, oxetan-2-one, etc., and combinations thereof. A suitable (generally ionic or non-ionic) photoacid generator (PAG) is included in the acid catalyzed polymerizable liquid, examples of which include, but are not limited to onium salts, sulfonium and iodonium salts, etc., such as diphenyl iodide hexafluorophosphate, diphenyl iodide hexafluoroarsenate, diphenyl iodide hexafluoroantimonate, diphenyl p-methoxyphenyl triflate, diphenyl p-toluenyl triflate, diphenyl p-isobutylphenyl triflate, diphenyl p-tert-butylphenyl triflate, triphenylsulfonium hexafluororphosphate, triphenylsulfonium hexafluoroarsenate, triphenylsulfonium hexafluoroantimonate, triphenylsulfonium triflate, dibutylnaphthylsulfonium triflate, *etc.,* including mixtures thereof. *See, e.g.,* US Patents Nos. 7,824,839; 7,550,246; 7,534,844; 6,692,891; 5,374,500; and 5,017,461; *see also* Photoacid Generator Selection Guide for the electronics industry and energy curable coatings (BASF 2010).

***Hydrogels.*** In some embodiments suitable resins includes photocurable hydrogels like poly(ethylene glycols) (PEG) and gelatins. PEG hydrogels have been used to deliver a variety of biologicals, including Growth factors; however, a great challenge facing PEG hydrogels crosslinked by chain growth polymerizations is the potential for irreversible protein damage. Conditions to maximize release of the biologicals from photopolymerized PEG diacrylate hydrogels can be enhanced by inclusion of affinity binding peptide sequences in the monomer resin solutions, prior to photopolymerization allowing sustained delivery. Gelatin is a biopolymer frequently used in food, cosmetic, pharmaceutical and photographic industries. It is obtained by thermal denaturation or chemical and physical degradation of collagen. There are three kinds of gelatin, including those found in animals, fish and humans. Gelatin from the skin of cold water fish is considered safe to use in pharmaceutical applications. UV or visible light can be used to crosslink appropriately modified gelatin. Methods for crosslinking gelatin include cure derivatives from dyes such as Rose Bengal.

***Photocurable silicone resins.*** A suitable resin includes photocurable silicones. UV cure silicone rubber, such as Siliopren™ UV Cure Silicone Rubber can be used as can LOCTITE™ Cure Silicone adhesives sealants. Applications include optical instruments, medical and surgical equipment, exterior lighting and enclosures, electrical connectors / sensors, fiber optics and gaskets.

***Biodegradable resins.*** Biodegradable resins are particularly important for implantable devices to deliver drugs or for temporary performance applications, like biodegradable screws and stents (US patents 7,919,162; 6,932,930). Biodegradable copolymers of lactic acid and glycolic acid (PLGA) can be dissolved in PEG dimethacrylate to yield a transparent resin suitable for use. Polycaprolactone and PLGA oligomers can be functionalized with acrylic or methacrylic groups to allow them to be effective resins for use.

***Photocurable polyurethanes.*** A particularly useful resin is photocurable polyurethanes. A photopolymerizable polyurethane composition comprising (1) a polyurethane based on an aliphatic diisocyanate, poly(hexamethylene isophthalate glycol) and, optionally, 1,4-butanediol; (2) a polyfunctional acrylic ester; (3) a photoinitiator; and (4) an anti-oxidant, can be formulated so that it provides a hard, abrasion-resistant, and stain-resistant material (US Patent 4,337,130). Photocurable thermoplastic polyurethane elastomers incorporate photoreactive diacetylene diols as chain extenders.

***High performance resins.*** In some embodiments, high performance resins are used. Such high performance resins may sometimes require the use of heating to melt and/or reduce the viscosity thereof, as noted above and discussed further below. Examples of such resins include, but are not limited to, resins for those materials sometimes referred to as liquid crystalline polymers of esters, ester-imide, and ester-amide oligomers, as described in US Patents Nos. 7,507,784; 6,939,940. Since such resins are sometimes employed as high-temperature thermoset resins, in the present invention they further comprise a suitable photoinitiator such as benzophenone, anthraquinone, amd fluoroenone initiators (including derivatives thereof), to initiate cross-linking on irradiation, as discussed further below.

***Additional example resins.*** Particularly useful resins for dental applications include EnvisionTEC's Clear Guide, EnvisionTEC's E-Denstone Material. Particularly useful resins for hearing aid industries include EnvisionTEC's e-Shell 300 Series of resins. Particularly useful resins include EnvisionTEC's HTM140IV High Temperature Mold Material for use directly with vulcanized rubber in molding / casting applications. A particularly useful material for making tough and stiff parts includes EnvisionTEC's RC31 resin. A particulary useful resin for investment casting applications includes EnvisionTEC's Easy Cast EC500.

***Additional resin ingredients.*** The liquid resin or polymerizable material can have solid particles suspended or dispersed therein. Any suitable solid particle can be used, depending upon the end product being fabricated. The particles can be metallic, organic/polymeric, inorganic, or composites or mixtures thereof. The particles can be nonconductive, semi-conductive, or conductive (including metallic and non-metallic or polymer conductors); and the particles can be magnetic, ferromagnetic, paramagnetic, or nonmagnetic. The particles can be of any suitable shape, including spherical, elliptical, cylindrical, etc. The particles can comprise an active agent or detectable compound as described below, though these may also be provided dissolved solubilized in the liquid resin as also discussed below. For example, magnetic or paramagnetic particles or nanoparticles can be employed. The resin or polymerizable material may contain a dispersing agent, such as an ionic surfactant, a non-ionic surfactant, a block copolymer, or the like.

The liquid resin can have additional ingredients solubilized therein, including pigments, dyes, active compounds or pharmaceutical compounds, detectable compounds (e.g., fluorescent, phosphorescent, radioactive), etc., again depending upon the particular purpose of the product being fabricated. Examples of such additional ingredients include, but are not limited to, proteins, peptides, nucleic acids (DNA, RNA) such as siRNA, sugars, small organic compounds (drugs and drug-like compounds), etc., including combinations thereof.

***Inhibitors of polymerization.*** Inhibitors or polymerization inhibitors for use in the present invention may be in the form of a liquid or a gas. In some embodiments, gas inhibitors are preferred. The specific inhibitor will depend upon the monomer being polymerized and the polymerization reaction. For free radical polymerization monomers, the inhibitor can conveniently be oxygen, which can be provided in the form of a gas such as air, a gas enriched in oxygen (optionally but in some embodiments preferably containing additional inert gases to reduce combustibility thereof), or in some embodiments pure oxygen gas. In alternate embodiments, such as where the monomer is polymerized by photoacid generator initiator, the inhibitor can be a base such as ammonia, trace amines (*e.g*. methyl amine, ethyl amine, di and trialkyl amines such as dimethyl amine, diethyl amine, trimethyl amine, triethyl amine, etc.), or carbon dioxide, including mixtures or combinations thereof.

***Polymerizable liquids carrying live cells.*** In some embodiments, the polymerizable liquid may carry live cells as "particles" therein. Such polymerizable liquids are generally aqueous, and may be oxygenated, and may be considered as "emulsions" where the live cells are the discrete phase. Suitable live cells may be plant cells (*e.g*., monocot, dicot), animal cells (*e.g.,* mammalian, avian, amphibian, reptile cells), microbial cells (*e.g.,* prokaryote, eukaryote, protozoal, etc.), etc. The cells may be of differentiated cells from or corresponding to any type of tissue (*e.g*., blood, cartilage, bone, muscle, endocrine gland, exocrine gland, epithelial, endothelial, etc.), or may be undifferentiated cells such as stem cells or progenitor cells. In such embodiments the polymerizable liquid can be one that forms a hydrogel, including but not limited to those described in US Patents Nos. 7,651,683; 7,651,682; 7,556,490; 6,602,975; 5,836,313; etc.

### 2. Apparatus.

A non-limiting embodiment of an apparatus of the invention is shown in **Figure 2****.** It comprises a radiation source **11** such as a digital light processor (DLP) providing electromagnetic radiation **12** which though reflective mirror **13** illuminates a build chamber defined by wall **14** and a rigid build plate **15** forming the bottom of the build chamber, which build chamber is filled with liquid resin **16.** The bottom of the chamber **15** is constructed of rigid build plate comprising a rigid semipermeable member as discussed further below. The top of the object under construction **17** is attached to a carrier **18.** The carrier is driven in the vertical direction by linear stage **19,** although alternate structures can be used as discussed below.

A liquid resin reservoir, tubing, pumps liquid level sensors and/or valves can be included to replenish the pool of liquid resin in the build chamber (not shown for clarity) though in some embodiments a simple gravity feed may be employed. Drives/actuators for the carrier or linear stage, along with associated wiring, can be included in accordance with known techniques (again not shown for clarity). The drives/actuators, radiation source, and in some embodiments pumps and liquid level sensors can all be operatively associated with a suitable controller, again in accordance with known techniques.

Build plates **15** used to carry out the present invention generally comprise or consist of a (typically rigid or solid, stationary, and/or fixed) semipermeable (or gas permeable) member, alone or in combination with one or more additional supporting substrates (*e.g.*, clamps and tensioning members to rigidify an otherwise flexible semipermeable material). The rigid semipermeable member can be made of any suitable material that is optically transparent at the relevant wavelengths (or otherwise transparent to the radiation source, whether or not it is visually transparent as perceived by the human eye-*i.e.,* an optically transparent window may in some embodiments be visually opaque), including but not limited to porous or microporous glass, and the rigid gas permeable polymers used for the manufacture of rigid gas permeable contact lenses. *See, e.g.,* Norman G. Gaylord, US Patent No. RE31,406; see also US Patents Nos. 7,862,176; 7,344,731; 7,097,302; 5,349,394; 5,310,571; 5,162,469; 5,141,665; 5,070,170; 4,923,906; and 4,845,089. In some embodiments such materials are characterized as glassy and/or amorphous polymers and/or substantially crosslinked that they are essentially non-swellable. Preferably the rigid semipermeable member is formed of a material that does not swell when contacted to the liquid resin or material to be polymerized (*i.e.,* is "non-swellable"). Suitable materials for the rigid semipermeable member include rigid amorphous fluoropolymers, such as those described in US Patent Nos. 5,308,685 and 5,051,115. For example, such fluoropolymers are particularly useful over silicones that would potentially swell when used in conjunction with organic liquid resin inks to be polymerized. For some liquid resin inks, such as more aqueous-based monomeric systems and / or some polymeric resin ink systems that have low swelling tendencies, silicone based window materials maybe suitable. The solubility or permeability of organic liquid resin inks can be dramatically decreased by a number of known parameters including increasing the crosslink density of the window material or increasing the molecular weight of the liquid resin ink. In some embodiments the build plate may be formed from a thin film or sheet of material which is flexible when separated from the apparatus of the invention, but which is clamped and tensioned when installed in the apparatus (*e.g*., with a tensioning ring) so that it is rendered rigid in the apparatus. Particular materials include TEFLON AF® fluoropolymers, commercially available from DuPont. Additional materials include perfluoropolyether polymers such as described in US Patents Nos. 8,268,446; 8,263,129; 8,158,728; and 7,435,495.

It will be appreciated that essentially all solid materials, and most of those described above, have some inherent "flex" even though they may be considered "rigid," depending on factors such as the shape and thickness thereof and environmental factors such as the pressure and temperature to which they are subjected. In addition, the terms "stationary" or "fixed" with respect to the build plate is intended to mean that no mechanical interruption of the process occurs, or no mechanism or structure for mechanical interruption of the process (as in a layer-by-layer method or apparatus) is provided, even if a mechanism for incremental adjustment of the build plate (for example, adjustment that does not lead to or cause collapse of the gradient of polymerization zone) is provided).

The semipermeable member typically comprises a top surface portion, a bottom surface portion, and an edge surface portion. The build surface is on the top surface portion; and the feed surface may be on one, two, or all three of the top surface portion, the bottom surface portion, and/or the edge surface portion. In the embodiment illustrated in **Figure 2** the feed surface is on the bottom surface portion, but alternate configurations where the feed surface is provided on an edge, and/or on the top surface portion (close to but separate or spaced away from the build surface) can be implemented with routine skill.

The semipermeable member has, in some embodiments, a thickness of from 0.01, 0.1 or 1 millimeters to 10 or 100 millimeters, or more (depending upon the size of the item being fabricated, whether or not it is laminated to or in contact with an additional supporting plate such as glass, etc., as discussed further below.

The permeability of the semipermeable member to the polymerization inhibitor will depend upon conditions such as the pressure of the atmosphere and/or inhibitor, the choice of inhibitor, the rate or speed of fabrication, etc. In general, when the inhibitor is oxygen, the permeability of the semipermeable member to oxygen may be from 10 or 20 Barrers, up to 1000 or 2000 Barrers, or more. For example, a semipermeable member with a permeability of 10 Barrers used with a pure oxygen, or highly enriched oxygen, atmosphere under a pressure of 10.34 Bar (150 PSI) may perform substantially the same as a semipermeable member with a permeability of 500 Barrers when the oxygen is supplied from the ambient atmosphere under atmospheric conditions.

Thus, the semipermeable member may comprise a flexible polymer film (having any suitable thickness, *e.g*., from 0.001, 0.01, 0.05, 0.1 or 1 millimeters to 1, 5, 10, or 100 millimeters, or more), and the build plate may further comprise a tensioning member (*e.g*., a peripheral clamp and an operatively associated strain member or stretching member, as in a "drum head"; a plurality of peripheral clamps, etc., including combinations thereof) connected to the polymer film and to fix and rigidify the film (*e.g.,* at least sufficiently so that the film does not stick to the object as the object is advanced and resiliently or elastically rebound therefrom). The film has a top surface and a bottom surface, with the build surface on the top surface and the feed surface preferably on the bottom surface. In other embodiments, the semipermeable member comprises: (i) a polymer film layer (having any suitable thickness, *e.g*., from 0.001, 0.01, 0.1 or 1 millimeters to 5, 10 or 100 millimeters, or more), having a top surface positioned for contacting said polymerizable liquid and a bottom surface, and (ii) a rigid, gas permeable, optically transparent supporting member (having any suitable thickness, *e.g*., from 0.01, 0.1 or 1 millimeters to 10, 100, or 200 millimeters, or more), contacting said film layer bottom surface. The supporting member has a top surface contacting the film layer bottom surface, and the supporting member has a bottom surface which may serve as the feed surface for the polymerization inhibitor. Any suitable materials that are semipermeable (that is, permeable to the polymerization inhibitor) may be used. For example, the polymer film or polymer film layer may, for example, be a fluoropolymer film, such as an amorphous thermoplastic fluoropolymer like TEFLON AF 1600™ or TEFLON AF 2400™ fluoropolymer films, or perfluoropolyether (PFPE), particularly a crosslinked PFPE film, or a crosslinked silicone polymer film. The supporting member comprises a silicone or crosslinked silicone polymer member such as a polydmiethylxiloxane member, a rigid gas permeable polymer member, or a porous or microporous glass member. Films can be laminated or clamped directly to the rigid supporting member without adhesive (*e.g*., using PFPE and PDMS materials), or silane coupling agents that react with the upper surface of a PDMS layer can be utilized to adhere to the first polymer film layer. UV-curable, acrylate-functional silicones can also be used as a tie layer between UV-curable PFPEs and rigid PDMS supporting layers.

When configured for placement in the apparatus, the carrier defines a "build region" on the build surface, within the total area of the build surface. Because lateral "throw" (*e.g.*, in the X and/or Y directions) is not required in the present invention to break adhesion between successive layers, as in the Joyce and Chen devices noted previously, the area of the build region within the build surface may be maximized (or conversely, the area of the build surface not devoted to the build region may be minimized). Hence in some embodiments, the total surface area of the build region can occupy at least fifty, sixty, seventy, eighty, or ninety percent of the total surface area of the build surface.

As shown in **Figure 2****,** the various components are mounted on a support or frame assembly **20.** While the particular design of the support or frame assembly is not critical and can assume numerous configurations, in the illustrated embodiment it is comprised of a base **21** to which the radiation source **11** is securely or rigidly attached, a vertical member **22** to which the linear stage is operatively associated, and a horizontal table **23** to which wall **14** is removably or securely attached (or on which the wall is placed), and with the build plate rigidly fixed, either permanently or removably, to form the build chamber as described above.

As noted above, the build plate can consist of a single unitary and integral piece of a rigid semipermeable member, or can comprise additional materials. For example, a porous or microporous glass can be laminated or fixed to a rigid semipermeable material. Or, a semipermeable member as an upper portion can be fixed to a transparent lower member having purging channels formed therein for feeding gas carrying the polymerization inhibitor to the semipermeable member (through which it passes to the build surface to facilitate the formation of a release layer of unpolymerized liquid material, as noted above and below). Such purge channels may extend fully or partially through the base plate: For example, the purge channels may extend partially into the base plate, but then end in the region directly underlying the build surface to avoid introduction of distortion. Specific geometries will depend upon whether the feed surface for the inhibitor into the semipermeable member is located on the same side or opposite side as the build surface, on an edge portion thereof, or a combination of several thereof.

Any suitable radiation source (or combination of sources) can be used, depending upon the particular resin employed, including electron beam and ionizing radiation sources. In a preferred embodiment the radiation source is an actinic radiation source, such as one or more light sources, and in particular one or more ultraviolet light sources. Any suitable light source can be used, such as incandescent lights, fluorescent lights, phosphorescent or luminescent lights, a laser, light-emitting diode, etc., including arrays thereof. The light source preferably includes a pattern-forming element operatively associated with a controller, as noted above. In some embodiments, the light source or pattern forming element comprises a digital (or deformable) micromirror device (DMD) with digital light processing (DLP), a spatial modulator (SLM), or a microelectromechanical system (MEMS) mirror array, a mask (aka a reticle), a silhouette, or a combination thereof. See, US Patent No. 7,902,526. Preferably the light source comprises a spatial light modulation array such as a liquid crystal light valve array or micromirror array or DMD (*e.g.*, with an operatively associated digital light processor, typically in turn under the control of a suitable controller), configured to carry out exposure or irradiation of the polymerizable liquid without a mask, *e.g*., by maskless photolithography. *See, e.g.,* US Patents Nos. 6,312,134; 6,248,509; 6,238,852; and 5,691,541.

In some embodiments, as discussed further below, there may be movement in the X and/or Y directions concurrently with movement in the Z direction, with the movement in the X and/or Y direction hence occurring during polymerization of the polymerizable liquid (this is in contrast to the movement described in Y. Chen et al., or M. Joyce, *supra,* which is movement between prior and subsequent polymerization steps for the purpose of replenishing polymerizable liquid). In the present invention such movement may be carried out for purposes such as reducing "burn in" or fouling in a particular zone of the build surface.

Because an advantage of some embodiments of the present invention is that the size of the build surface on the semipermeable member (*i.e.,* the build plate or window) may be reduced due to the absence of a requirement for extensive lateral "throw" as in the Joyce or Chen devices noted above, in the methods, systems and apparatus of the present invention lateral movement (including movement in the X and/or Y direction or combination thereof) of the carrier and object (if such lateral movement is present) is preferably not more than, or less than, 80, 70, 60, 50, 40, 30, 20, or even 10 percent of the width (in the direction of that lateral movement) of the build region.

While in some embodiments the carrier is mounted on an elevator to advance up and away from a stationary build plate, on other embodiments the converse arrangement may be used: That is, the carrier may be fixed and the build plate lowered to thereby advance the carrier away therefrom. Numerous different mechanical configurations will be apparent to those skilled in the art to achieve the same result.

Depending on the choice of material from which the carrier is fabricated, and the choice of polymer or resin from which the article is made, adhesion of the article to the carrier may sometimes be insufficient to retain the article on the carrier through to completion of the finished article or "build." For example, an aluminum carrier may have lower adhesion than a poly(vinyl chloride) (or "PVC") carrier. Hence one solution is to employ a carrier comprising a PVC on the surface to which the article being fabricated is polymerized. If this promotes too great an adhesion to conveniently separate the finished part from the carrier, then any of a variety of techniques can be used to further secure the article to a less adhesive carrier, including but not limited to the application of adhesive tape such as "Greener Masking Tape for Basic Painting #2025 High adhesion" to further secure the article to the carrier during fabrication.

### 3. Controller and process control.

The methods and apparatus of the invention can include process steps and apparatus features to implement process control, including feedback and feed-forward control, to, for example, enhance the speed and/or reliability of the method.

A controller for use in carrying out the present invention may be implemented as hardware circuitry, software, or a combination thereof. In one embodiment, the controller is a general purpose computer that runs software, operatively associated with monitors, drives, pumps, and other components through suitable interface hardware and/or software. Suitable software for the control of a three-dimensional printing or fabrication method and apparatus as described herein includes, but is not limited to, the ReplicatorG open source 3d printing program, 3DPrint™ controller software from 3D systems, Slic3r, Skeinforge, KISSlicer, Repetier-Host, PrintRun, Cura, etc., including combinations thereof.

Process parameters to directly or indirectly monitor, continuously or intermittently, during the process(*e.g*., during one, some or all of said filling, irradiating and advancing steps) include, but are not limited to, irradiation intensity, temperature of carrier, polymerizable liquid in the build zone, temperature of growing product, temperature of build plate, pressure, speed of advance, pressure, force (*e.g.*, exerted on the build plate through the carrier and product being fabricated), strain (*e.g*., exerted on the carrier by the growing product being fabricated), thickness of release layer, etc.

Known parameters that may be used in feedback and/or feed-forward control systems include, but are not limited to, expected consumption of polymerizable liquid (*e.g*., from the known geometry or volume of the article being fabricated), degradation temperature of the polymer being formed from the polymerizable liquid, etc.

Process conditions to directly or indirectly control, continuously or step-wise, in response to a monitored parameter, and/or known parameters (*e.g*., during any or all of the process steps noted above), include, but are not limited to, rate of supply of polymerizable liquid, temperature, pressure, rate or speed of advance of carrier, intensity of irradiation, duration of irradiation (*e.g*. for each "slice"), etc.

For example, the temperature of the polymerizable liquid in the build zone, or the temperature of the build plate, can be monitored, directly or indirectly with an appropriate thermocouple, non-contact temperature sensor (*e.g.,* an infrared temperature sensor), or other suitable temperature sensor, to determine whether the temperature exceeds the degradation temperature of the polymerized product. If so, a process parameter may be adjusted through a controller to reduce the temperature in the build zone and/or of the build plate. Suitable process parameters for such adjustment may include: decreasing temperature with a cooler, decreasing the rate of advance of the carrier, decreasing intensity of the irradiation, decreasing duration of radiation exposure, etc.

In addition, the intensity of the irradiation source (*e.g*., an ultraviolet light source such as a mercury lamp) may be monitored with a photodetector to detect a decrease of intensity from the irradiation source (*e.g*., through routine degradation thereof during use). If detected, a process parameter may be adjusted through a controller to accommodate the loss of intensity. Suitable process parameters for such adjustment may include: increasing temperature with a heater, decreasing the rate of advance of the carrier, increasing power to the light source, etc.

As another example, control of temperature and/or pressure to enhance fabrication time may be achieved with heaters and coolers (individually, or in combination with one another and separately responsive to a controller), and/or with a pressure supply (*e.g*., pump, pressure vessel, valves and combinations thereof) and/or a pressure release mechanism such as a controllable valve (individually, or in combination with one another and separately responsive to a controller).

In some embodiments the controller is configured to maintain the gradient of polymerization zone described herein *(see, e.g.,* **Figure 1****)** throughout the fabrication of some or all of the final product. The specific configuration (*e.g*., times, rate or speed of advancing, radiation intensity, temperature, etc.) will depend upon factors such as the nature of the specific polymerizable liquid and the product being created. Configuration to maintain the gradient of polymerization zone may be carried out empirically, by entering a set of process parameters or instructions previously determined, or determined through a series of test runs or "trial and error"; configuration may be provided through pre-determined instructions; configuration may be achieved by suitable monitoring and feedback (as discussed above), combinations thereof, or in any other suitable manner.

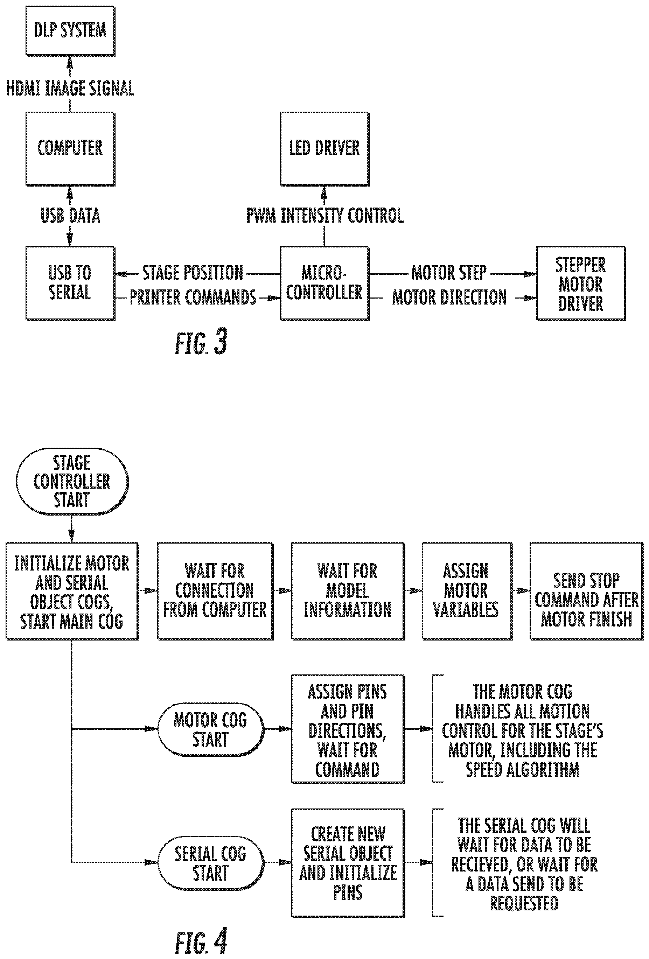

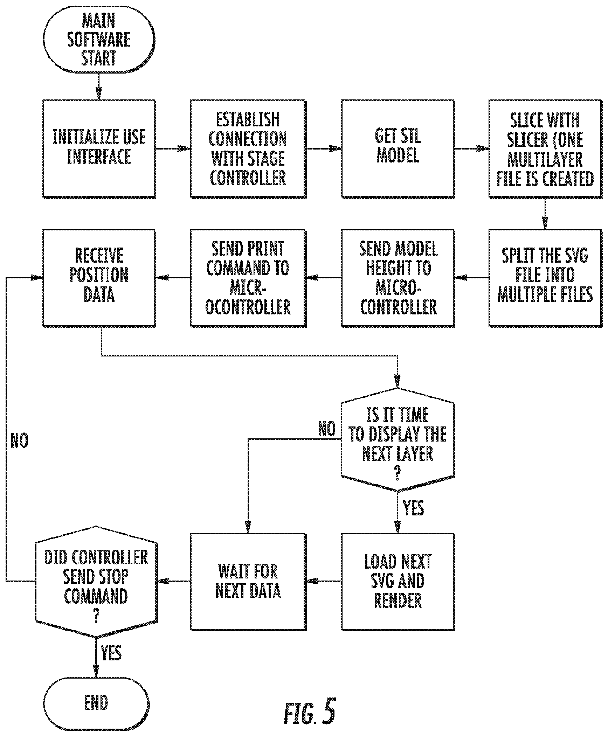

In some embodiments, a method and apparatus as described above may be controlled by a software program running in a general purpose computer with suitable interface hardware between that computer and the apparatus described above. Numerous alternatives are commercially available. Non-limiting examples of one combination of components is shown in **Figures 3 to 5****,** where "Microcontroller" is Parallax Propeller, the Stepper Motor Driver is Sparkfun EasyDriver, the LED Driver is a Luxeon Single LED Driver, the USB to Serial is a Parallax USB to Serial converter, and the DLP System is a Texas Instruments LightCrafter system.

### 4. General Methods.

As noted above, the present invention provides a method of forming a three-dimensional object, comprising the steps of: (a) providing a carrier and a build plate, said build plate comprising a semipermeable member, said semipermeable member comprising a build surface and a feed surface separate from said build surface, with said build surface and said carrier defining a build region therebetween, and with said feed surface in fluid contact with a polymerization inhibitor; then (concurrently and/or sequentially) (b) filing said build region with a polymerizable liquid, said polymerizable liquid contacting said build segment, (c) irradiating said build region through said build plate to produce a solid polymerized region in said build region, with a liquid film release layer comprised of said polymerizable liquid formed between said solid polymerized region and said build surface, the polymerization of which liquid film is inhibited by said polymerization inhibitor; and (d) advancing said carrier with said polymerized region adhered thereto away from said build surface on said stationary build plate to create a subsequent build region between said polymerized region and said top zone. In general the method includes (e) continuing and/or repeating steps (b) through (d) to produce a subsequent polymerized region adhered to a previous polymerized region until the continued or repeated deposition of polymerized regions adhered to one another forms said three-dimensional object.

Since no mechanical release of a release layer is required, or no mechanical movement of a build surface to replenish oxygen is required, the method can be carried out in a continuous fashion, though it will be appreciated that the individual steps noted above may be carried out sequentially, concurrently, or a combination thereof. Indeed, the rate of steps can be varied over time depending upon factors such as the density and/or complexity of the region under fabrication.

Also, since mechanical release from a window or from a release layer generally requires that the carrier be advanced a greater distance from the build plate than desired for the next irradiation step, which enables the window to be recoated, and then return of the carrier back closer to the build plate (*e.g.,* a "two steps forward one step back" operation), the present invention in some embodiments permits elimination of this "back-up" step and allows the carrier to be advanced unidirectionally, or in a single direction, without intervening movement of the window for re-coating, or "snapping" of a pre-formed elastic release-layer. However, in other embodiments of the invention, reciprocation is utilized not for the purpose of obtaining release, but for the purpose of more rapidly filling or pumping polymerizable liquid into the build region.

In some embodiments, the advancing step is carried out sequentially in uniform increments (*e.g.,* of from 0.1 or 1 microns, up to 10 or 100 microns, or more) for each step or increment. In some embodiments, the advancing step is carried out sequentially in variable increments (*e.g.,* each increment ranging from 0.1 or 1 microns, up to 10 or 100 microns, or more) for each step or increment. The size of the increment, along with the rate of advancing, will depend in part upon factors such as temperature, pressure, structure of the article being produced (*e.g*., size, density, complexity, configuration, etc.)

In other embodiments of the invention, the advancing step is carried out continuously, at a uniform or variable rate.

In some embodiments, the rate of advance (whether carried out sequentially or continuously) is from about 0.1 1, or 10 microns per second, up to about to 100, 1,000, or 10,000 microns per second, again depending again depending on factors such as temperature, pressure, structure of the article being produced, intensity of radiation, etc

As described further below, in some embodiments the filling step is carried out by forcing said polymerizable liquid into said build region under pressure. In such a case, the advancing step or steps may be carried out at a rate or cumulative or average rate of at least 0.1, 1, 10, 50, 100, 500 or 1000 microns per second, or more. In general, the pressure may be whatever is sufficient to increase the rate of said advancing step(s) at least 2, 4, 6, 8 or 10 times as compared to the maximum rate of repetition of said advancing steps in the absence of said pressure. Where the pressure is provided by enclosing an apparatus such as described above in a pressure vessel and carrying the process out in a pressurized atmosphere (*e.g*., of air, air enriched with oxygen, a blend of gasses, pure oxygen, etc.) a pressure of 0.69, 1.38, 2.07 or 2.76 Bar (10, 20, 30 or 40 pounds per inch (PSI)) up to 13.78, 20.68, 27.58 or 34.47 Bar (200, 300, 400 or 500 PSI) or more, may be used. For fabrication of large irregular objects higher pressures may be less preferred as compared to slower fabrication times due to the cost of a large high pressure vessel. In such an embodiment, both the feed surface and the polymerizable liquid can be are in fluid contact with the same compressed gas (*e.g.,* one comprising from 20 to 95 percent by volume of oxygen, the oxygen serving as the polymerization inhibitor.

On the other hand, when smaller items are fabricated, or a rod or fiber is fabricated that can be removed or exited from the pressure vessel as it is produced through a port or orifice therein, then the size of the pressure vessel can be kept smaller relative to the size of the product being fabricated and higher pressures can (if desired) be more readily utilized.

As noted above, the irradiating step is in some embodiments carried out with patterned irradiation. The patterned irradiation may be a fixed pattern or may be a variable pattern created by a pattern generator (*e.g*., a DLP) as discussed above, depending upon the particular item being fabricated.

When the patterned irradiation is a variable pattern rather than a pattern that is held constant over time, then each irradiating step may be any suitable time or duration depending on factors such as the intensity of the irradiation, the presence or absence of dyes in the polymerizable material, the rate of growth, etc. Thus in some embodiments each irradiating step can be from 0.001, 0.01, 0.1, 1 or 10 microseconds, up to 1, 10, or 100 minutes, or more, in duration. The interval between each irradiating step is in some embodiments preferably as brief as possible, *e.g*., from 0.001, 0.01, 0.1, or 1 microseconds up to 0.1, 1, or 10 seconds.

In some embodiments the build surface is flat; in other the build surface is irregular such as convexly or concavely curved, or has walls or trenches formed therein. In either case the build surface may be smooth or textured.

Curved and/or irregular build plates or build surfaces can be used in fiber or rod formation, to provide different materials to a single object being fabricated (that is, different polymerizable liquids to the same build surface through channels or trenches formed in the build surface, each associated with a separate liquid supply, etc.

***Carrier Feed Channels for Polymerizable liquid.*** While polymerizable liquid may be provided directly to the build plate from a liquid conduit and reservoir system, in some embodiments the carrier include one or more feed channels therein. The carrier feed channels are in fluid communication with the polymerizable liquid supply, for example a reservoir and associated pump. Different carrier feed channels may be in fluid communication with the same supply and operate simultaneously with one another, or different carrier feed channels may be separately controllable from one another (for example, through the provision of a pump and/or valve for each). Separately controllable feed channels may be in fluid communication with a reservoir containing the same polymerizable liquid, or may be in fluid communication with a reservoir containing different polymerizable liquids. Through the use of valve assemblies, different polymerizable liquids may in some embodiments be alternately fed through the same feed channel, if desired.

### 5. Reciprocating feed of polymerizable liquid.

In an embodiment of the present invention, the carrier is vertically reciprocated with respect to the build surface to enhance or speed the refilling of the build region with the polymerizable liquid.

In some embodiments, the vertically reciprocating step, which comprises an upstroke and a downstroke, is carried out with the distance of travel of the upstroke being greater than the distance of travel of the downstroke, to thereby concurrently carry out the advancing step (that is, driving the carrier away from the build plate in the Z dimension) in part or in whole.

In some embodiments, the speed of the upstroke gradually accelerates (that is, there is provided a gradual start and/or gradual acceleration of the upstroke, over a period of at least 20, 30, 40, or 50 percent of the total time of the upstroke, until the conclusion of the upstroke, or the change of direction which represents the beginning of the downstroke. Stated differently, the upstroke begins, or starts, gently or gradually.

In some embodiments, the speed of the downstroke gradually decelerates (that is, there is provided a gradual termination and/or gradual deceleration of the downstroke, over a period of at least 20, 30, 40, or 50 percent of the total time of the downstroke. Stated differently, the downstroke concludes, or ends, gently or gradually.

While in some embodiments there is an abrupt end, or abrupt deceleration, of the upstroke, and an abrupt beginning or deceleration of the downstroke (*e.g*., a rapid change in vector or direction of travel from upstroke to downstroke), it will be appreciated that gradual transitions may be introduced here as well (*e.g*., through introduction of a "plateau" or pause in travel between the upstroke and downstroke). It will also be appreciated that, while each reciprocating step may be consist of a single upstroke and downstroke, the reciprocation step may comprise a plurality of 2, 3, 4 or 5 or more linked set of reciprocations, which may e the same or different in frequent and/or amplitude

In some embodiments, the vertically reciprocating step is carried out over a total time of from 0.01 or 0.1 seconds up to 1 or 10 seconds (*e.g.,* per cycle of an upstroke and a downstroke).

In some embodiments, the upstroke distance of travel is from 0.02 or 0.2 millimeters (or 20 or 200 microns) to 1 or 10 millimeters (or 1000 to 10,000 microns). The distance of travel of the downstroke may be the same as, or less than, the distance of travel of the upstroke, where a lesser distance of travel for the downstroke serves to achieve the advancing of the carrier away from the build surface as the three-dimensional object is gradually formed. Where a reciprocation step comprises multiple linked reciprocations, the sum distance of travel of all upstrokes in that set is preferably greater than the sum distance of travel of all downstrokes in that set, to achieve the advancing of the carrier away from the build surface as the three-dimensional object is gradually formed.

Preferably the vertically reciprocating step, and particularly the upstroke thereof, does not cause the formation of gas bubbles or a gas pocket in the build region, but instead the build region remains filled with the polymerizable liquid throughout the reciprocation steps, and the gradient of polymerization zone or region remains in contact with the "dead zone" and with the growing object being fabricated throughout the reciprocation steps. As will be appreciated, a purpose of the reciprocation is to speed or enhance the refilling of the build region, particularly where larger build regions are to be refilled with polymerizable liquid, as compared to the speed at which the build region could be refilled without the reciprocation step.

In some embodiments, the advancing step is carried out intermittently at a rate of 1, 2, 5 or 10 individual advances per minute up to 300, 600, or 1000 individual advances per minute, each followed by a pause during which an irradiating step is carried out. It will be appreciated that one or more reciprocation steps (*e.g*., upstroke plus downstroke) may be carried out within each advancing step. Stated differently, the reciprocating steps may be nested within the advancing steps.

In some embodiments, the individual advances are carried out over an average distance of travel for each advance of from 10 or 50 microns to 100 or 200 microns (optionally including the total distance of travel for each vertically reciprocating step, *e.g.,* the sum of the upstroke distance minus the downstroke distance).

Apparatus for carrying out the invention in which the reciprocation steps described herein are implemented substantially as described above, with the drive associated with the carrier, and/or with an additional drive operatively associated with the transparent member, and with the controller operatively associated with either or both thereof and configured to reciprocate the carrier and transparent member with respect to one another as described above.

### 6. Increased speed of fabrication by increasing light intensity.

In general, it has been observed that speed of fabrication can increase with increased light intensity. In some embodiments, the light is concentrated or "focused" at the build region to increase the speed of fabrication. This may be accomplished using an optical device such as an objective lens.

The speed of fabrication may be generally proportional to the light intensity. For example, the build speed in millimeters per hour may be calculated by multiplying the light intensity in milliWatts per square centimeter and a multiplier. The multiplier may depend on a variety of factors, including those discussed below. A range of multipliers, from low to high, may be employed. On the low end of the range, the multiplier may be about 10, 15, 20 or 30. On the high end of the multiplier range, the multiplier may be about 150, 300, 400 or more.

The relationships described above are, in general, contemplated for light intensities of from 1, 5 or 10 milliWatts per square centimeter, up to 20 or 50 milliWatts per square centimeter.

Certain optical characteristics of the light may be selected to facilitate increased speed of fabrication. By way of example, a band pass filter may be used with a mercury bulb light source to provide 365 ± 10 nm light measured at Full Width Half Maximum (FWHM). By way of further example, a band pass filter may be used with an LED light source to provide 375 ± 15 nm light measured at FWHM.

As noted above, poymerizable liquids used in such processes are, in general, free radical polymerizable liquids with oxygen as the inhibitor, or acid-catalyzed or cationically polymerizable liquids with a base as the inhibitor. Some specific polymerizable liquids will of course cure more rapidly or efficiently than others and hence be more amenable to higher speeds, though this may be offset at least in part by further increasing light intensity.

At higher light intensities and speeds, the "dead zone" may become thinner as inhibitor is consumed. If the dead zone is lost then the process will be disrupted. In such case, the supply of inhibitor may be enhanced by any suitable means, including providing an enriched and/or pressurized atmosphere of inhibitor, a more porous semipermeable member, a stronger or more powerful inhibitor (particularly where a base is employed), etc.

In general, lower viscosity polymerizable liquids are more amenable to higher speeds, particularly for fabrication of articles with a large and/or dense cross section (although this can be offset at least in part by increasing light intensity). Polymerizable liquids with viscosities in the range of 50 or 100 centipoise, up to 600, 800 or 1000 centipoise or more (as measured at room temperature and atmospheric pressure with a suitable device such as a HYDRAMOTION REACTAVISC™ Viscometer (available from Hydramotion Ltd, 1 York Road Business Park, Malton, York YO17 6YA England). In some embodiments, where necessary, the viscosity of the polymerizable liquid can advantageously be reduced by heating the polymerizable liquid, as described above.

In some embodiments, such as fabrication of articles with a large and/or dense cross-section, speed of fabrication can be enhanced by introducing reciprocation to "pump" the polymerizable liquid, as described above, and/or the use of feeding the polymerizable liquid through the carrier, as also described above, and/or heating and/or pressurizing the polymerizable liquid, as also described above.

### 7. Tiling.

It may be desirable to use more than one light engine to preserve resolution and light intensity for larger build sizes. Each light engine may be configured to project an image (e.g., an array of pixels) into the build region such that a plurality of "tiled" images are projected into the build region. As used herein, the term "light engine" can mean an assembly including a light source, a DLP device such as a digital micromirror device and an optical device such as an objective lens. The "light engine" may also include electronics such as a controller that is operatively associated with one or more of the other components.

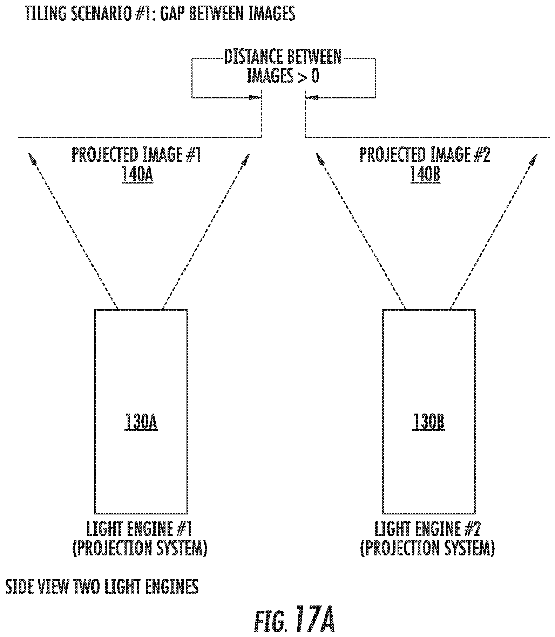

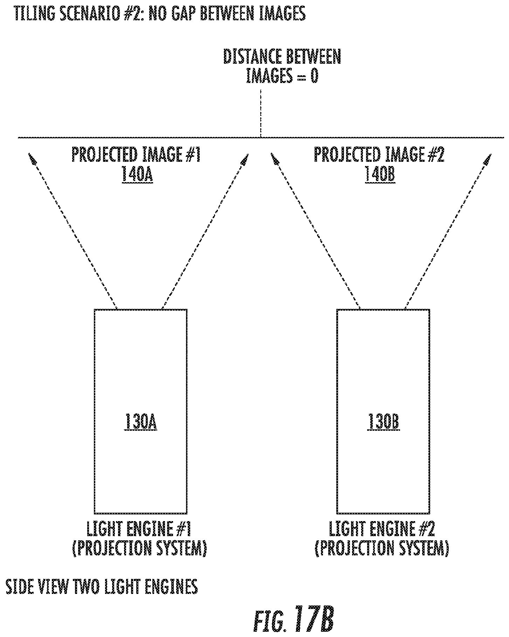

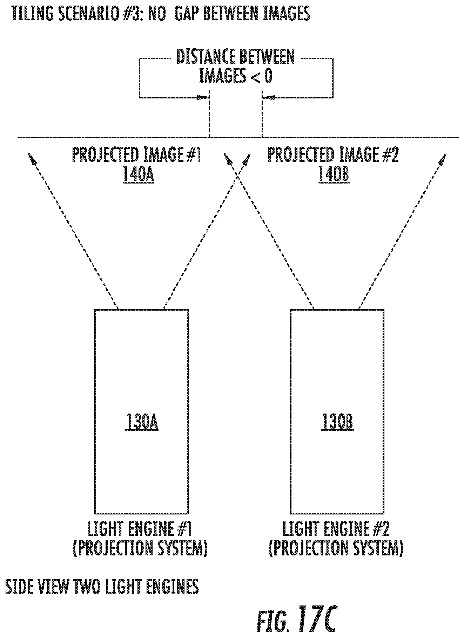

This is shown schematically in **Figures 17A-17C****.** The light engine assemblies **130A, 130B** produce adjacent or "tiled" images **140A, 140B.** In **Figure 17A****,** the images are slightly misaligned; that is, there is a gap between them. In **Figure 17B****,** the images are aligned; there is no gap and no overlap between them. In **Figure 17C****,** there is a slight overlap of the images **140A** and **140B.**

In some embodiments, the configuration with the overlapped images shown in **Figure 17C** is employed with some form of "blending" or "smoothing" of the overlapped regions as generally discussed in, for example, U.S. Patent Nos. 7,292,207, 8,102,332, 8,427,391, 8,446,431 and U.S. Patent Application Publication Nos. 2013/0269882, 2013/0278840 and 2013/0321475, the disclosures of which are incorporated herein in their entireties.
The tiled images can allow for larger build areas without sacrificing light intensity, and therefore can facilitate faster build speeds for larger objects. It will be understood that more than two light engine assemblies (and corresponding tiled images) may be employed. Various embodiments of the invention employ at least 4, 8, 16, 32, 64, 128 or more tiled images.

### 8. Fabrication products.

Three-dimensional products produced by the methods and processes of the present invention may be final, finished or substantially finished products, or may be intermediate products subject to further manufacturing steps such as surface treatment, laser cutting, electric discharge machining, etc., is intended. Intermediate products include products for which further additive manufacturing, in the same or a different apparatus, may be carried out). For example, a fault or cleavage line may be introduced deliberately into an ongoing "build" by disrupting, and then reinstating, the gradient of polymerization zone, to terminate one region of the finished product, or simply because a particular region of the finished product or "build" is less fragile than others.

Numerous different products can be made by the methods and apparatus of the present invention, including both large-scale models or prototypes, small custom products, miniature or microminiature products or devices, etc. Examples include, but are not limited to, medical devices and implantable medical devices such as stents, drug delivery depots, functional structures, microneedle arrays, fibers and rods such as waveguides, micromechanical devices, microfluidic devices, etc.

Thus in some embodiments the product can have a height of from 0.1 or 1 millimeters up to 10 or 100 millimeters, or more, and/or a maximum width of from 0.1 or 1 millimeters up to 10 or 100 millimeters, or more. In other embodiments, the product can have a height of from 10 or 100 nanometers up to 10 or 100 microns, or more, and/or a maximum width of from 10 or 100 nanometers up to 10 or 100 microns, or more. These are examples only: Maximum size and width depends on the architecture of the particular device and the resolution of the light source and can be adjusted depending upon the particular goal of the embodiment or article being fabricated.

In some embodiments, the ratio of height to width of the product is at least 2:1, 10:1, 50:1, or 100:1, or more, or a width to height ratio of 1:1, 10:1, 50:1, or 100:1, or more.

In some embodiments, the product has at least one, or a plurality of, pores or channels formed therein, as discussed further below.

The processes described herein can produce products with a variety of different properties. Hence in some embodiments the products are rigid; in other embodiments the products are flexible or resilient. In some embodiments, the products are a solid; in other embodiments, the products are a gel such as a hydrogel. In some embodiments, the products have a shape memory (that is, return substantially to a previous shape after being deformed, so long as they are not deformed to the point of structural failure). In some embodiments, the products are unitary (that is, formed of a single polymerizable liquid); in some embodiments, the products are composites (that is, formed of two or more different polymerizable liquids). Particular properties will be determined by factors such as the choice of polymerizable liquid(s) employed.

In some embodiments, the product or article made has at least one overhanging feature (or "overhang"), such as a bridging element between two supporting bodies, or a cantilevered element projecting from one substantially vertical support body. Because of the unidirectional, continuous nature of some embodiments of the present processes, the problem of fault or cleavage lines that form between layers when each layer is polymerized to substantial completion and a substantial time interval occurs before the next pattern is exposed, is substantially reduced. Hence, in some embodiments the methods are particularly advantageous in reducing, or eliminating, the number of support structures for such overhangs that are fabricated concurrently with the article.

### 9. Hollow objects and breathing orifices.

As noted above, the present invention is concerned with the production of three-dimensional objects that include a hollow portion, or a portion of which is hollow. Such objects generally comprise a wall and an internal cavity or chamber. The wall is generally continuous, giving the object a continuous or "solid" rather than perforated appearance. The production of such objects by the methods described herein is facilitated by forming at least one breathing orifice in the wall, generally in the upper portion (that is, the portion produced first, as compared to the lower portion), and in some embodiments adjacent the carrier.

In general, the filling step is carried out by providing a liquid pool of polymerizable liquid on the build surface. In the production of hollow objects as described herein, that liquid pool creates a fluid seal that seals the internal cavity to the build surface during the advancing step or steps while the three dimensional object is being produced. The breathing orifice(s) thus constitute the only fluid communication between the internal cavity.

Such objects may have any suitable shape or size. In some embodiments, the internal cavity has a volume of at least 1 or 2, or 10 or 20, cubic centimeters. The wall may be of any suitable thickness, and may be uniform or non-uniform in thickness. If non-uniform in thickness, the wall may have a thin region, relative to other thicker region, that is susceptible to failure: for example, a region (which may be in the lower wall portion) with a maximum thickness of not more than 2 or 4 millimeters, or-in the case of larger objects (*e.g*., objects with an internal cavity volume of 2 or 4 liters or more)-1 or 2 centimeters.

The internal cavity may be closed by the polymerizable material during later phases of production thereof, before the object is separated from the build surface, or the internal cavity may be open to the exterior of the object once the object is separated from the build surface. In either case, the cavity is generally sealed to the build surface during production of the object by the liquid polymerizable material positioned on top of the build surface.

In some embodiments, the volume of the internal cavity is at least 50, 60, 70 or 80 percent, up to 95 or 99 percent, of the total volume of the object (the sum of the volume of the cavity plus the total volume occupied by the object wall). Where the object is an open object once separated from the build surface as noted above, such volumes are calculated after completion of the object, just prior to separation and removal from the build surface or the carrier (whichever closes the open portion of the completed object based on the orientation of the object for production, and of course not including the volume of the carrier and/or build surface itself in the calculation of the volume of the object).

In some embodiments, the volume of the internal cavity may represent only a portion of the total volume of the object, this internal cavity nonetheless can benefit from the addition of breathing vents to facilitate accurate replication of the object without the burden of unduly large negative pressures.

The internal cavity may be completely hollow, or may contain structural support or rigidifying elements, depending on the material from which the object is made and the purpose for which the object is intended

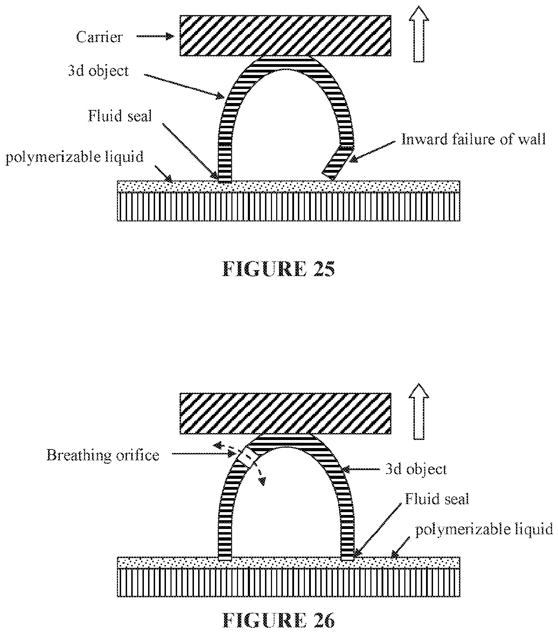

The breathing orifice may comprise a simple port (as shown in Figures 26-27 discussed below) with any suitable regular or irregular cross-section. Alternatively, and particularly where the orifice is to be sealed, the breathing orifice may comprises a labyrinthine port: that is, a port following a path containing curves, corners, and composites thereof, preferably constricted in cross-section, to which a liquid sealant may more readily adhere and more securely seal when solidified. Where the completed object has an open base which can be oriented for production first (*e.g.,* as the upper portion) the open base may serve as a breathing orifice for the object so long as it is aligned with one or more corresponding breathing orifices formed in the carrier, as discussed below.

After formation of the three dimensional object is completed, and the object removed from the carrier and build surface, the breathing orifice(s) may optionally be sealed. Sealing may be done with any suitable material, including but not limited to thermoplastic fillers, and liquid adhesive (*e.g.,* epoxy, urethane, cyanoacrylate, etc.) Alternatively, and depending upon the particular object being produced, the lower portion (representing the end or near-end product) may be separated from the upper portion (which represents an intermediate portion discarded during manufacturing), or at least that segment of the upper portion which contains the orifice(s). Such separating may be achieved by any suitable technique, including but not limited to cutting, burning, grinding, and combinations thereof.

In some embodiments, the provision of one or more breathing orifices advantageously reduces vacuum forces on the window, allows for faster and higher light intensity production (*e.g.,* in continuous rather than intermittent or reciprocal mode) without undue damage to the object and/or build surface; allows for larger total surface area of objects adjacent the build surface; reduces flow limitations on the polymerizable liquid by allowing liquid inside the object to contribute to production of the wall; and/or supports higher part fidelity, all depending upon the geometry and performance requirements for the particular object being produced and the characteristics of the particular polymerizable liquid from which that object is being produced.

While the process has been described with reference to a single internal cavity in an object, it will be appreciated that multiple, separate, internal cavities may be created in the "Z" dimension, with each such cavity having its own breathing orifice(s).

### 10. Alternate methods and apparatus.

In an alternate embodiment of the invention, the methods may be carried out with a method and apparatus as described in Hull, US Patent No. 5,236,637, at Figure 4, where the polymerizable liquid is floated on top of an immiscible liquid layer (said to be "non-wetting" therein). Here, the immiscible liquid layer serves as the build surface. If so implemented, the immiscible liquid (which may be aqueous or non-aqueous) preferably: *(i)* has a density greater than the polymerizable liquid, *(ii)* is immiscible with the polymerizable liquid, and *(iii)* is wettable with the polymerizable liquid. Ingredients such as surfactants, wetting agents, viscosity-enhancing agents, pigments, and particles may optionally be included in either or both of the polymerizable liquid or immiscible liquid.

While the present invention is preferably carried out by continuous liquid interphase polymerization, as described in detail above and in further detail below, in some embodiments alternate methods and apparatus for bottom-up three-dimension fabrication may be used, including layer-by-layer fabrication. Examples of such methods and apparatus include, but are not limited to, those described U.S. Patents No. 7,438,846 to John and U.S. Patent No. 8,110,135 to El-Siblani, and in U.S. Patent Application Publication Nos. 2013/0292862 to Joyce and 2013/0295212 to Chen et al.

The present invention is explained in greater detail in the following non-limiting Examples.

### EXAMPLE 1

### High Aspect Ratio Adjustable Tension Build Plate Assembly

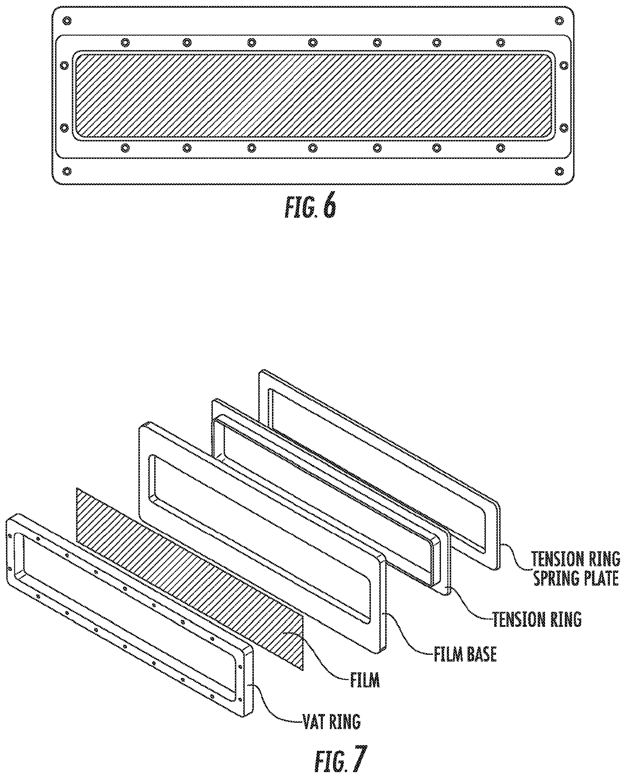

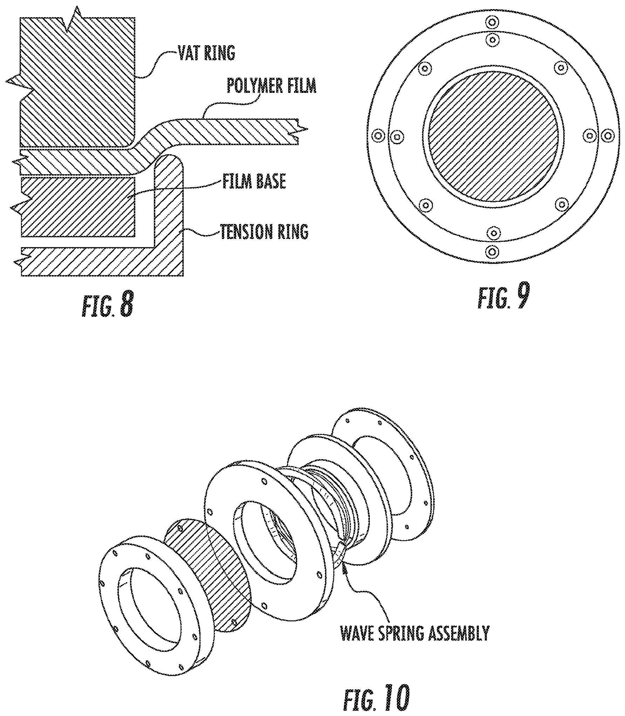

**Figure 6** is a top view and **Figure 7** is an exploded view of a 7.62 centimeter (3 inch) by 40.64 centimeter (16 inch) "high aspect" rectangular build plate (or "window") assembly of the present invention, where the film dimensions are 8.89 centimeters (3.5 inches) by 43.18 centimeters (17 inches). The greater size of the film itself as compared to the internal diameter of vat ring and film base provides a peripheral or circumferential flange portion in the film that is clamped between the vat ring and the film base, as shown in side-sectional view in **Figure 8****.** One or more registration holes (not shown) may be provided in the polymer film in the peripheral or circumferential flange portion to aid in aligning the polymer film between the vat ring and film base, which are fastened to one another with a plurality of screws (not shown) extending from one to the other (some or all passing through holes in the peripheral edge of the polymer film) in a manner that rigidly and securely clamps the polymer film therebetween.

As shown in **Figures 7-8** a tension ring is provided that abuts the polymer film and stretches the film to rigidity the film. The tension ring may be provided as a pre-set member, or may be an adjustable member. Adjustment may be achieved by providing a spring plate facing the tension ring, with one or more compressible elements such as polymer cushions or springs (e.g., flat springs, coil springs, wave springs etc.) therebetween, and with adjustable fasteners such as screw fasteners or the like passing from the spring plate through (or around) the tension ring to the film base.

Polymer films are preferably fluoropolymer films, such as an amorphous thermoplastic fluoropolymer, in a thickness of 0.01 or 0.05 millimeters to 0.1 or 1 millimeters, or more. In some embodiments we use Biogeneral Teflon AF 2400 polymer film, which is 0.0035 inches (0.09 millimeters) thick, and Random Technologies Teflon AF 2400 polymer film, which is 0.004 inches (0.1 millimeters) thick.

Tension on the film is preferably adjusted with the tension ring to about 10 to 100 pounds, depending on operating conditions such as fabrication speed.

The vat ring, film base, tension ring, and tension ring spring plate may be fabricated of any suitable, preferably rigid, material, including metals (*e.g*., stainless steel, aluminum and aluminum alloys), carbon fiber, polymers, and composites thereof.

Registration posts and corresponding sockets may be provided in any of the vat ring, film base, tension ring and/or spring plate, as desired.

### EXAMPLE 2

### Round Adjustable Tension Round Build Plate Assembly

**Figure 9** is a top view and **Figure 10** is an exploded view of a 7.32 centimeter (2.88 inch) diameter round build plate of the invention, where the film dimension may be 10.16 centimeters (4 inches) in diameter. Construction is in like manner to that given in **Example 1** above, with a circumferential wave spring assembly shown in place. Tension on the film preferably adjusted to a like tension as given in Example 1 above (again depending on other operating conditions such as fabrication speed).

**Figure 10** is an exploded view of the build plate of Figure 8.

### EXAMPLE 3

### Additional Embodiments of Adjustable Build Plates

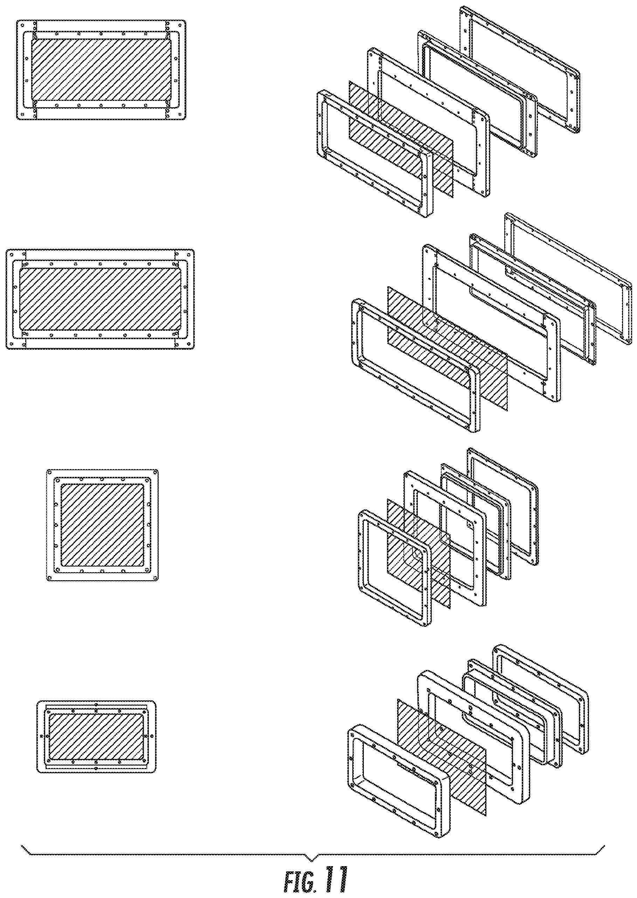

**Figure 11** shows various alternate embodiments of the build plates of Figures 7-10. Materials and tensions may be in like manner as described above.

### EXAMPLE 4

### Example Embodiment of an Apparatus

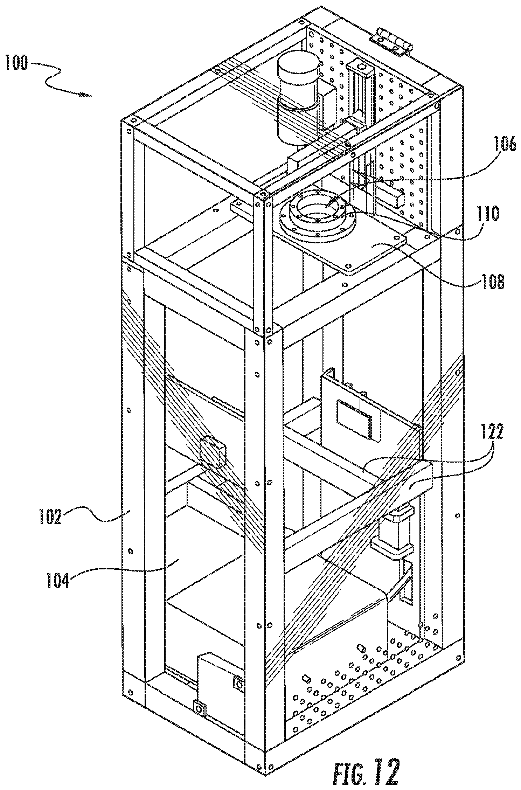

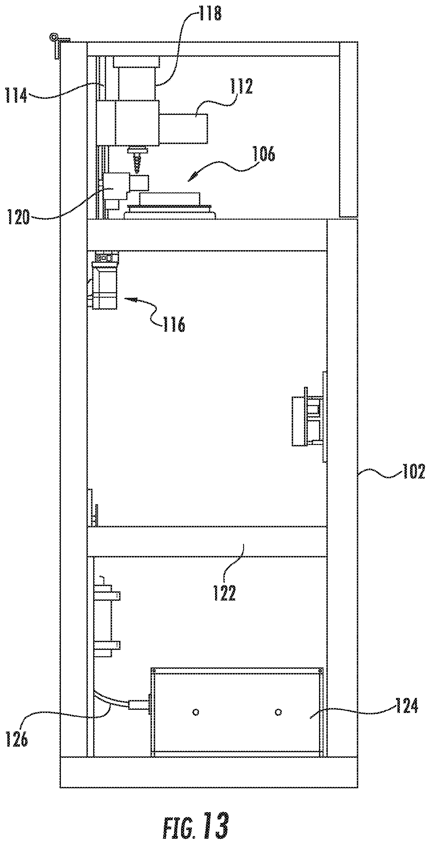

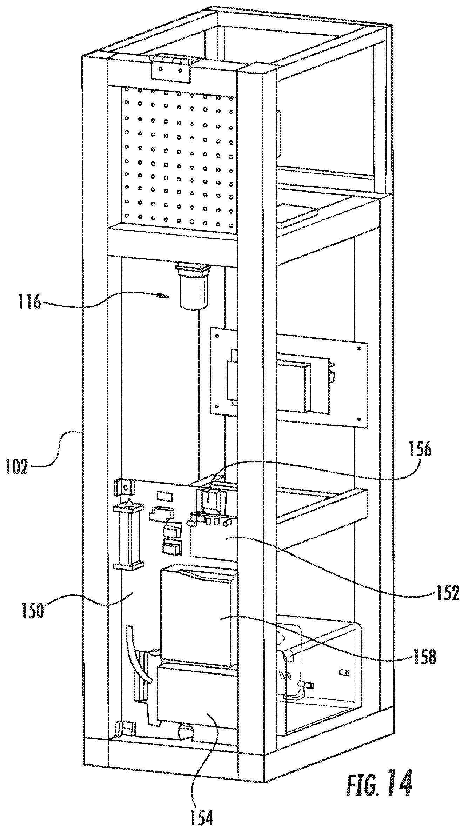

**Figure 12** is a front perspective view, **Figure 13** is a side view and **Figure 14** is a rear perspective view of an apparatus **100** according to an exemplary embodiment of the invention. The apparatus **100** includes a frame **102** and an enclosure **104.** Much of the enclosure **104** is removed or shown transparent in **Figures 12-14****.**

The apparatus **100** includes several of the same or similar components and features as the apparatus described above in reference to **Figure 2****.** Referring to **Figure 12****,** a build chamber **106** is provided on a base plate **108** that is connected to the frame **102.** The build chamber **106** is defined by a wall or vat ring **110** and a build plate or "window" such as one of the windows described above in reference to **Figures 2** and **6****-11.**

Turning to **Figure 13****,** a carrier **112** is driven in a vertical direction along a rail **114** by a motor **116.** The motor may be any suitable type of motor, such as a servo motor. An exemplary suitable motor is the NXM45A motor available from Oriental Motor of Tokyo, Japan.

A liquid reservoir **118** is in fluid communication with the build chamber **106** to replenish the build chamber **106** with liquid resin. For example, tubing may run from the liquid reservoir **118** to the build chamber **106.** A valve **120** controls the flow of liquid resin from the liquid reservoir **118** to the build chamber **106.** An exemplary suitable valve is a pinch-style aluminum solenoid valve for tubing available from McMaster-Carr of Atlanta, Georgia.

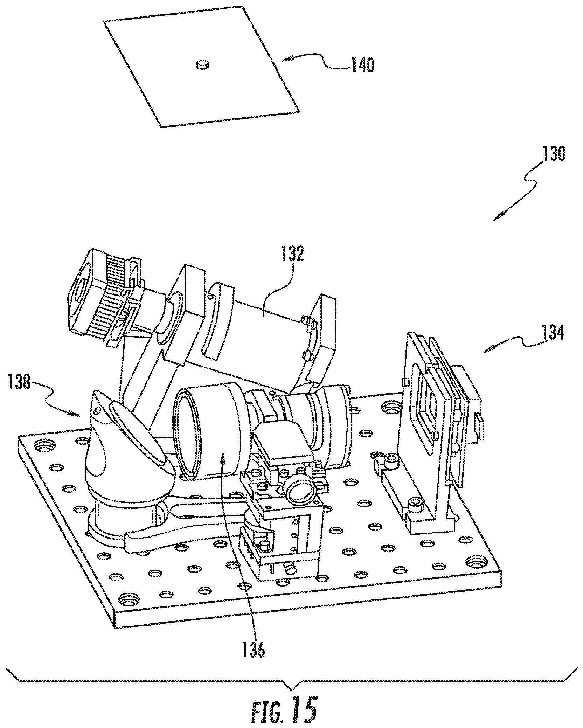

The frame **102** includes rails **122** or other some other mounting feature on which a light engine assembly **130 (****Figure 15****)** is held or mounted. A light source **124** is coupled to the light engine assembly **130** using a light guide entrance cable **126.** The light source **124** may be any suitable light source such as a BlueWave® 200 system available from Dymax Corporation of Torrington, Connecticut.

Turning to **Figure 15****,** the light engine or light engine assembly **130** includes condenser lens assembly **132** and a digital light processing (DLP) system including a digital micromirror device (DMD) **134** and an optical or projection lens assembly **136** (which may include an objective lens). A suitable DLP system is the DLP Discovery™ 4100 system available from Texas Instruments, Inc. of Dallas, Texas. Light from the DLP system is reflected off a mirror **138** and illuminates the build chamber **106.** Specifically, an "image" **140** is projected at the build surface or window.

Referring to **Figure 14****,** an electronic component plate or breadboard **150** is connected to the frame **102.** A plurality of electrical or electronic components are mounted on the breadboard **150.** A controller or processor **152** is operatively associated with various components such as the motor **116,** the valve **120,** the light source **124** and the light engine assembly **130** described above. A suitable controller is the Propeller Proto Board available from Parallax, Inc. of Rocklin, California.

Other electrical or electronic components operatively associated with the controller **152** include a power supply **154** and a motor driver **158** for controlling the motor **116.** In some embodiments, an LED light source controlled by pulse width modulation (PWM) driver **156** is used instead of a mercury lamp (e.g., the Dymax light source described above).

A suitable power supply is a 24 Volt, 2.5A, 60W, switching power supply (e.g., part number PS1-60W-24 (HF60W-SL-24) available from Marlin P. Jones & Assoc, Inc. of Lake Park, Florida). If an LED light source is used, a suitable LED driver is a 24 Volt, 1.4A LED driver (e.g., part number 788-1041-ND available from Digi-Key of Thief River Falls, Minnesota). A suitable motor driver is the NXD20-A motor driver available from Oriental Motor of Tokyo, Japan.

The apparatus of **Figures 12-15** has been used to produce an "image size" of about 75 mm by 100 mm with light intensity of about 5 mW/cm². The apparatus of **Figures 12-15** has been used to build objects at speeds of about 100 to 500 mm/hr. The build speed is dependent on light intensity and the geometry of the object.

### EXAMPLE 5

### Another Example Embodiment of an Apparatus

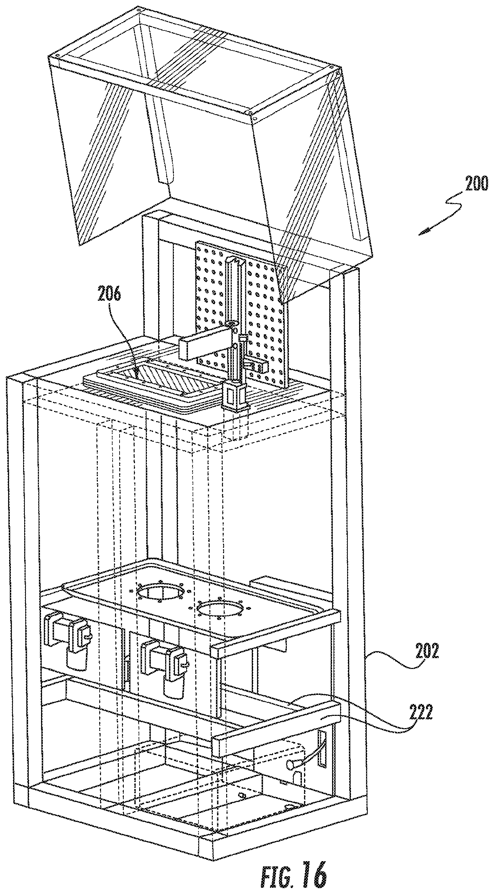

**Figure 16** is a front perspective view of an apparatus **200** according to another exemplary embodiment of the invention. The apparatus **200** includes the same components and features of the apparatus **100** with the following differences.

The apparatus **200** includes a frame **202** including rails **222** or other mounting feature at which two of the light engine assemblies **130** shown in **Figure 15** may be mounted in a side-by-side relationship. The light engine assemblies **130** are configured to provide a pair of "tiled" images at the build station **206.** The use of multiple light engines to provide tiled images is described in more detail above.

The apparatus of **Figure 16** has been used to provide a tiled "image size" of about 150 mm by 200 mm with light intensity of about 1 mW/cm². The apparatus of **Figure 16** has been used to build objects at speeds of about 50 to 100 mm/hr. The build speed is dependent on light intensity and the geometry of the object.

### EXAMPLE 6

### Another Example Embodiment of an Apparatus

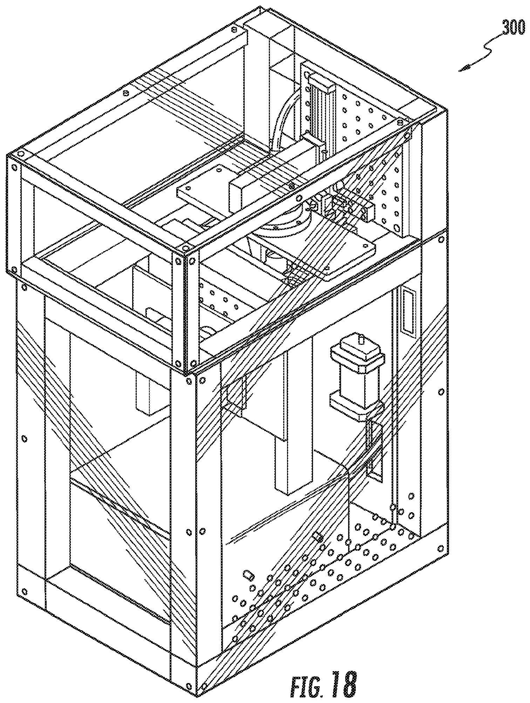

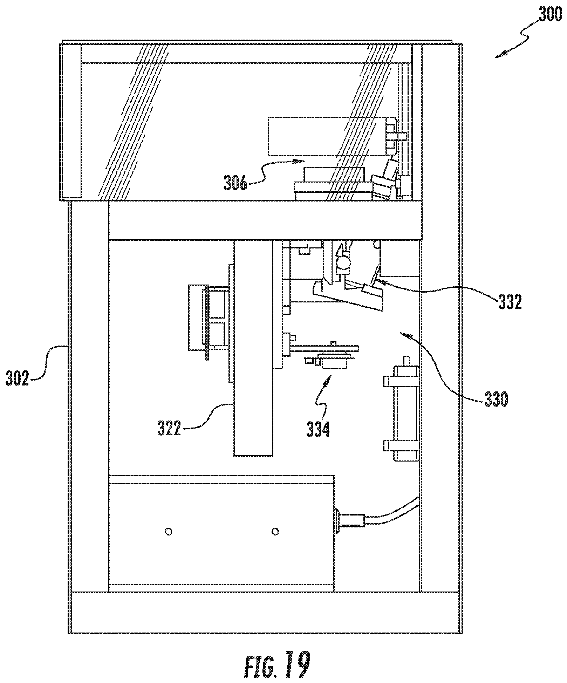

**Figure 18** is a front perspective view and **Figure 19** is a side view of an apparatus **300** according to another exemplary embodiment of the invention. The apparatus **300** includes the same components and features of the apparatus **100** with the following differences.

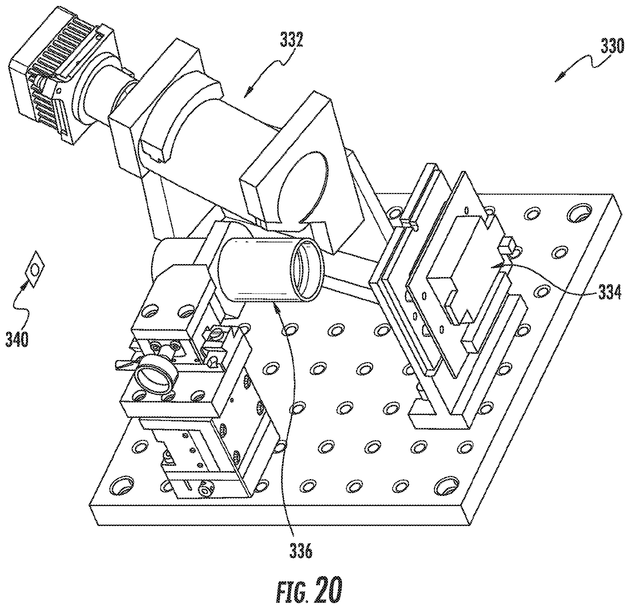

The apparatus **300** includes a frame **302** including rails **322** or other mounting feature at which a light engine assembly **330** shown in **Figure 20** may be mounted in a different orientation than the light assembly **130** of the apparatus **100.** Referring to **Figures 19** and **20****,** the light engine assembly **330** includes a condenser lens assembly **332** and a digital light processing (DLP) system including a digital micromirror device (DMD) **334** and an optical or projection lens assembly **336** (which may include an objective lens). A suitable DLP system is the DLP Discovery™ 4100 system available from Texas Instruments, Inc. of Dallas, Texas. Light from the DLP system illuminates the build chamber **306.** Specifically, an "image" **340** is projected at the build surface or window. In contrast to the apparatus **100,** a reflective mirror is not used with the apparatus **300.**

The apparatus of **Figures 18-20** has been used to provide "image sizes" of about 10.5 mm by 14 mm and about 24 mm by 32 mm with light intensity of about 200 mW/cm² and 40 mW/cm² The apparatus of **Figures 18-20** has been used to build objects at speeds of about 10,000 and 4,000 mm/hr. The build speed is dependent on light intensity and the geometry of the object.

### EXAMPLE 7

### Control Program with Lua Scripting

Current printer technology requires low level control in order to ensure quality part fabrication. Physical parameters such as light intensity, exposure time and the motion of the carrier should all be optimized to ensure the quality of a part. Utilizing a scripting interface to a controller such as the Parallax PROPELLER™ microcontroller using the programming language "Lua" provides the user with control over all aspects of the printer on a low level.. *See generally* R. Ierusalimschy, Programming in Lua (2013) (ISBN-10: 859037985X; ISBN-13: 978-8590379850).

This Example illustrates the control of a method and apparatus of the invention with an example program written utilizing Lua scripting. Program code corresponding to such instructions, or variations thereof that will be apparent to those skilled in the art, is written in accordance with known techniques based upon the particular microcontroller used.

***Concepts.*** A part consists of slices of polymer which are printed continuously. The shape of each slice is defined by the frame that is being displayed by the light engine.

***Frame.*** The frame represents the final output for a slice. The frame is what manifests as the physical geometry of the part. The data in the frame is what is projected by the printer to cure the polymer.

***Slice.*** All the 2D geometry that will be outputted to a frame should be combined in a Slice. Slices can consist of procedural geometry, Slices of a 3D model or any combination of the two. The slice generating process allows the user to have direct control over the composition of any frame.

***Slice of a 3D Model.*** A slice is a special type of 2D geometry derived from a 3D model of a part. It represents the geometry that intersects a plane that is parallel to the window. Parts are usually constructed by taking 3D models and slicing them at very small intervals. Each slice is then interpreted in succession by the printer and used to cure the polymer at the proper height.

***Procedural Geometry.*** Procedurally generated geometry can also be added to a slice. This is accomplished by invoking shape generation functions, such as "addcircle", "addrectangle", and others. Each function allows projection of the corresponding shape onto the printing window. A produced part appears as a vertically extruded shape or combination of shapes.

***Coordinate spaces: Stage.*** The coordinate system that the stage uses is usually calibrated such that the origin is 1-20 microns above the window.

***Coordinate spaces: Slice.*** Coordinate system of the projected slice is such that origin is located at the center of the print window.

### Quick Start.

The following is the most basic method of printing a part from a sliced 3D model. Printing a sliced model consists of 4 main parts: Loading the data, preparing the printer, printing, and shutdown.

***Loading Data.*** In this section of the code the sliced model data is loaded into memory. The file path to the model is defined in the Constants section of the code. See the full code below for details.

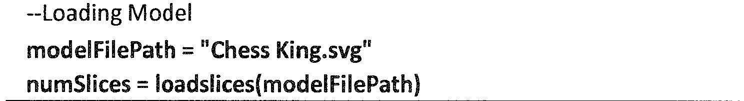

**Preparing the printer** it is important to do two things before printing. You must first turn on the light engine with the **relay** function, and if applicable, the desired fluid height should be set.

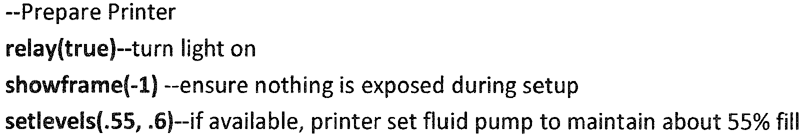

***Printing.*** The first step of the printing process is to calibrate the system and set the stage to its starting position by calling **gotostart.** Next we begin a for loop in which we print each slice. The first line of the for loop uses the **infoline** command to display the current slice index in the sidebar. Next we determine the height at which the next slice should be cured. That value is stored to nextHeight. Following this we move the stage to the height at which the next slice needs to be cured. To ensure a clean print it can sometimes be necessary to wait for oxygen to diffuse into the resin. Therefore we call **sleep** for a half second (the exact time for preExposureTime is defined in the constants section as well). After this it's time to actually cure the resin so we call **showframe** and pass it the index of the slice we want to print, which is stored in sliceIndex by the for loop. We sleep again after this for exposureTime seconds in order to let the resin cure. Before moving on to the next frame, we call **showframe(-1)** in order to prevent the light engine from curing any resin while the stage is moving to the next height.

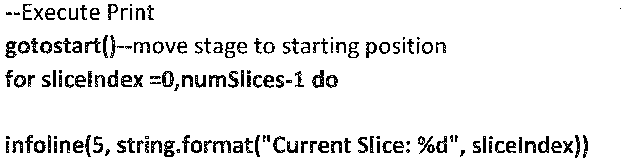

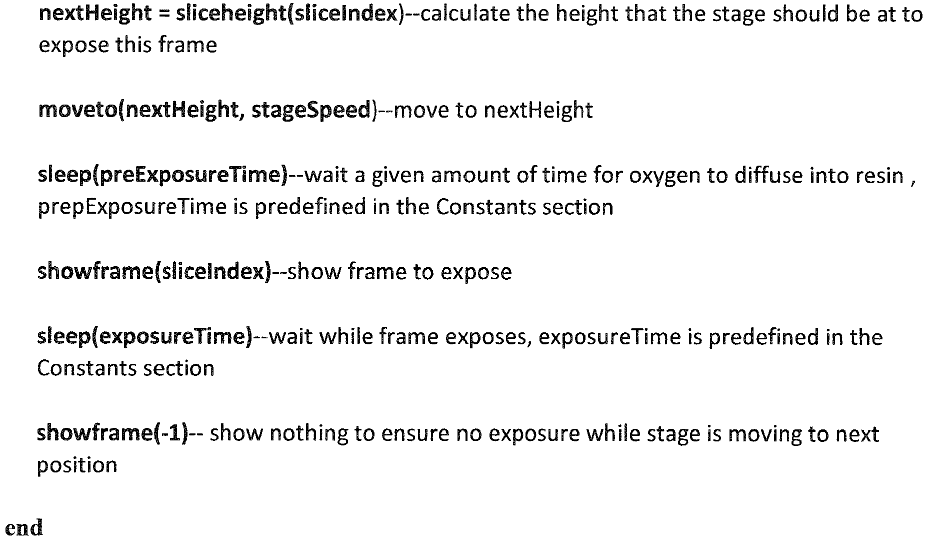

***Shutdown.*** The final step in the printing process is to shut down the printer. Call **relay(false)** to turn the light engine off. If you are using fluid control, call **setlevels(0,0)** to ensure the valve is shut off. Finally it is a good idea to move the stage up a bit after printing to allow for easy removal of the part.

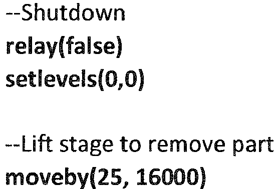

Fully completed code implementing instructions based on the above is set forth below.

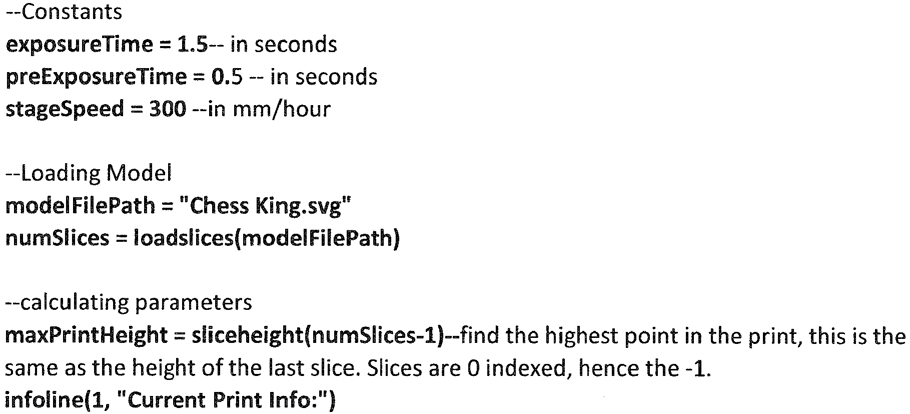

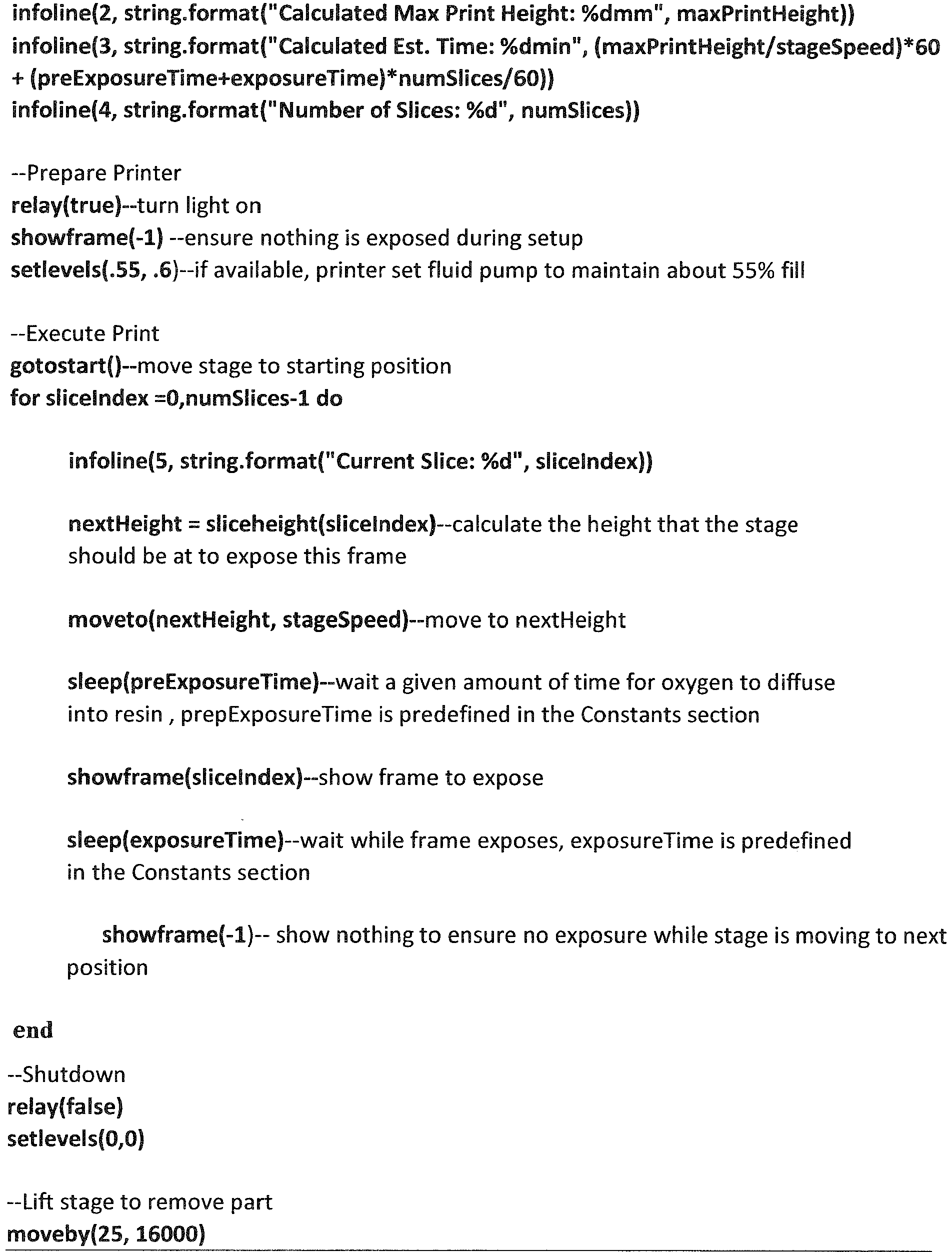

***Gotostart.*** The main purpose of **gotostart** is to calibrate the stage. This function resets the coordinate system to have the origin at the lowest point, where the limit switch is activated. Calling this command will move the stage down until the limit switch in the printer is activated; this should occur when the stage is at the absolute minimum height.
**gotostart()** moves stage to start at the maximum speed which varies from printer to printer.
**gotostart()**--moving to origin at default speed
**gotostart(number** *speed)* moves stage to start at speed given in millimeters/hour.
gotostart(15000)--moving stage to origin at 15000mm/hr
- *speed:* speed, in mm/hour, at which the stage will move to the start position.

### MOVETO

**moveto** allows the user to direct the stage to a desired height at a given speed. Safe upper and lower limits to speed and acceleration are ensured internally. moveto(number ***targetHeight,*** number ***speed*)**

**moveto(25, 15000)**--moving to 25mm at 15,000mm/hr
moveto(number ***targetHeight,*** number ***speed,*** number ***acceleration*)**
This version of the function allows an acceleration to be defined as well as speed. The stage starts moving at initial speed and then increases by acceleration.

**moveto(25, 20000, 1e7)**-moving the stage to 25mm at 20,000mm/hr while accelerating at 1 million mm/hr^2

moveto(number ***targetHeight,*** number ***speed,*** table ***controlPoints,*** function ***callback*)**
This function behaves similar to the basic version of the function. It starts at its initial speed and position and moves to the highest point on the control point table. *callback* is called when the stage passes each control point.

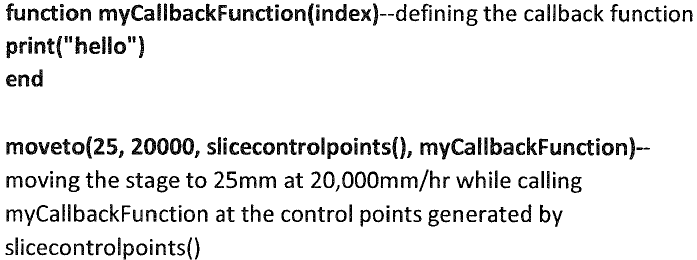

**moveto(number** *targetHeight,* **number** *speed,* **number** *acceleration,* **table** *controlPoints,* **function** *callback*) This function is the same as above except the user can pass an acceleration. The stage accelerates from its initial position continuously until it reaches the last control point. 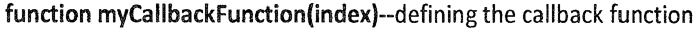 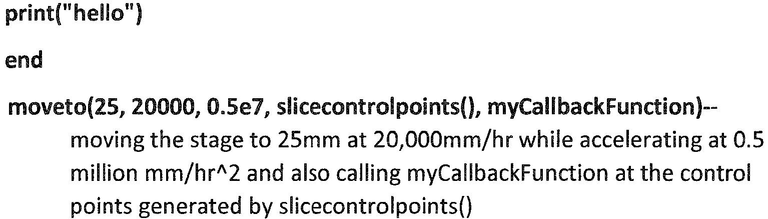
- *targetHeight:* height, in mm from the origin, that the stage will move to.
- *initialSpeed*: initial speed, in mm/hour, that the stage will start moving at.
- *acceleration:* rate, in mm/hour², that the speed of the stage will increase from initial speed.
- *controlPoints:* a table of target heights in millimeters. After the stage reaches a target height, it calls the function *callback.*
- *callback:* pointer to a function that will be called when the stage reaches a control point. The callback function should take one argument which is the index of the control point the stage has reached.

### moveby

**moveby** allows the user to change the height of the stage by a desired amount at a given speed. Safe upper and lower limits to speed and acceleration are ensured internally. **moveby(number** *dHeight,* **number** *initalSpeed*)
**1 moveby(-2, 15000)**--moving down 2mm at 15,000mm/hr

**moveby(number** *dHeight,* **number** *initialSpeed,* **number** *acceleration*)
This version of the function allows an acceleration to be defined as well as speed. The stage starts moving at initial speed and then increases by *acceleration* until it reaches its destination.

**1 moveby(25, 15000, 1e7)**--moving up 25mm at 15,000mm/hr while accelerating 1e7mm/hr^2

**moveby(number** *dHeight,* **number** *initialSpeed,* **table** *controlPoints,* **function** *callback)* This function usage allows the user to pass the function a table of absolute height coordinates. After the stage reaches one of these target heights, it calls the function 'callback.' Callback should take one argument which is the index of the control point it has reached.

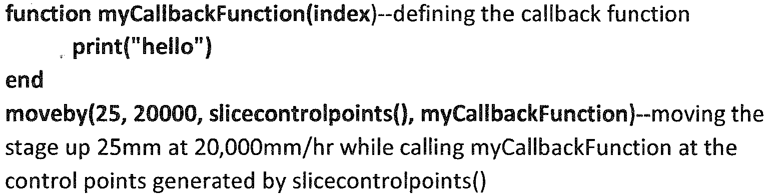

**moveby(number** *dHeight,* **number** *initialSpeed,* **number** *acceleration,* **table** *controlPoints,* **function** *callback*) This function is the same as above except the user can pass an acceleration. The stage accelerates from its initial position continuously until it reaches the last control point. 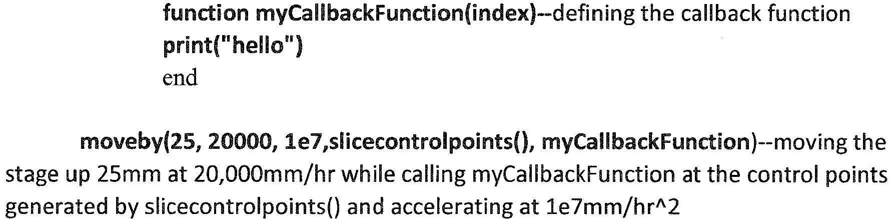
- *dHeight*: desired change in height, in millimeters, of the stage.
- *initialSpeed*: initial speed, in mm/hour, at which the stage moves.
- *acceleration:* rate, in mm/hour², that the speed of the stage will increase from initial speed.
- *controlPoints*: a table of target heights in millimeters. After the stage reaches a target height, it calls the function *callback.*
- *callback:* pointer to a function that will be called when the stage reaches a control point. The callback function should take one argument which is the index of the control point the stage has reached.

### LIGHT ENGINE CONTROL

### light

**relay** is used to turn the light engine on or off in the printer. The light engine must be on in order to print. Make sure the relay is set to off at the end of the script. **relay(boolean** *lightOn*)

**relay(true)**--turning light on
- *lightOn*: false turns the light engine off, true turns the light engine on.

### ADDING PROCEDURAL GEOMETRY

Functions in this section exist to project shapes without using a sliced part file. Every function in this section has an optional number value called *figureIndex.* Each figure in a slice has its own index. The figures reside one on top of another. Figures are drawn so that the figure with the highest index is 'on top' and will therefore not be occluded by anything below it. By default indexes are assigned in the order that they are created so the last figure created will be rendered on top. One can, however, change the index by passing the desired index into *figureIndex.*

Every function in this section **requires** a *sliceIndex* argument. This value is the index of the slice that the figure will be added to.

Note that generating this procedural geometry does not guarantee that it will be visible or printable. One must use one of the functions such as fillmask or linemask outlined below.

### addcircle

**addcircle(number *x***, **number *y***, **number** *radius,* **number** *slicelndex)* **addcircle** draws a circle in the specified slice slice.

### addCircle(0,0, 5, 0)--creating a circle at the origin of the first slice with a radius of 5mm

- *x*: is the horizontal distance, in millimeters, from the center of the circle to the origin.
- *y:* is the vertical distance, in millimeters, from the center of the circle to the origin.
- *radius:* is the radius of the circle measured in millimeters.
- *slicelndex:* index of the slice to which the figure will be added.

**Returns:** figure index of the figure.

### addrectangle

**addrectangle(number *x***, **number *y***, **number** *width,* **number** *height* **number** *slicelndex)* **addrectangle** draws a rectangle in the specified slice.

**addrectangle(0,0, 5,5, 0)**--creating a 5mm x 5mm square with its top left corner at the origin.
- x: horizontal coordinate, in millimeters, of the top left corner of the rectangle.
- y: vertical coordinate, in millimeters, of the top left corner of the rectangle.
- *width:* width of the rectangle in millimeters.
- *height:* height of the rectangle in millimeters.
- *slicelndex:* index of the slice to which the figure will be added.

**Returns:** figure index of the figure.

### addline

**addline(number** *x0,* **number** *y0,* **number** *x1,* **number** *y1,* **number** *slicelndex)* **addline** draws a line segment.

**addLine(0,0, 20,20, 0)**--creating a line from the origin to 20mm along the x and y axis on the first slice.
- *x0*: horizontal coordinate of the first point in the segment, measured in millimeters.
- *y0*: vertical coordinate of the first point in the segment, measured in millimeters.
- *x1:* horizontal coordinate of the second point in the segment, measured in millimeters.
- *y2*: vertical coordinate of the second point in the segment, measured in millimeters.
- *slicelndex:* index of the slice to which the figure will be added. **Returns:** figure index of the figure.

### addtext

**text(number** *x*, **number** *y*, **number** *scale,* **string** *text,* **number** *sliceIndex*) **addtext** draws text on the specified slice starting at position 'x, y' with letters of size 'scale'.

**addtext(0,0, 20, "Hello world", 0)--writing** Hello World at the origin of the first slice
- x: horizontal coordinate, measured in millimeters, of the top left corner of the bounding box around the text.
- y: vertical coordinate, measured in millimeters, of the top left corner of the bounding box around the text.
- *scale:* letter size in millimeters, interpretation may vary depending on the underlying operating system (Windows, OSX, Linux, etc).
- *text:* the actual text that will be drawn on the slice.
- *slicelndex:* index of the slice to which the
   figure will be added. **Returns:** figure index
   of the figure.

### 2.4 Fill & Line Control

### 2.4.1 fillmask

**fillmask(number** *color,* **number** *sliceIndex,* **number** *figureIndex*) **fillmask** is used to control how the procedural geometry is drawn. **fillmask** tells the figure in question to fill the entirety of its interior with color.
*-color:* can be any number on the range 0 to 255. Where 0 is black and 255 is white, any value in between is a shade of grey interpolated linearly between black and white based on the color value. Any value less than 0 will produce a transparent color.

**myCircle = addCircle(0,0,5,0)--**creating the circle to fill
**fillmask(255, 0, myCircle)-**-Creating a white filled circle
- *sliceIndex*:the index of the slice that should be modified.
- *figureIndex*:the is used to determine which figure on the slice should be filled. Each figure has its own unique index. If no figureIndex is passed, the fill applies to all figures in the slice.

### 2.4.2 linemask

**linemask(number** *color,* **number** *sliceIndex,* **number** *figureIndex*) **linemask** is used to control how the procedural geometry is drawn. **linemask** tells a figure to draw its outline in a specific color. The width of the outline is defined by the function **linewidth.**

**myCircle = addCircle(0,0,20,0)--**creating the circle to fill
**linemask(255, 0, myCircle)-**-setting the outline of the circle to be white
**fillmask(150,0, myCircle)-**-setting the fill of the circle to be grey
- *color*: can be any number on the range 0 to 255. Where 0 is black and 255 is white, any value in between is a shade of grey interpolated linearly between black and white based on the color value. Any value less than 0 will produce a transparent color.
- *slicelndex:* the index of the slice that should be modified.
- *figureIndex*: is used to determine which figure on the slice should be filled. Each figure has its own unique index. If no figureIndex is passed, the fill applies to all figures in the slice.

### 2.4.3linewidth

**linewidth(number** *width,* **number** *sliceIndex,* **number** *figureIndex*) **linewidth** is used to set the width of the line that **linemask** will use to outline the figure.

**linewidth(2,0)-**-setting the line width for every figure on the first slice to 2mm
- *sliceIndex*: the index of the slice that should be modified.
- *figureIndex:* is used to determine which figure on the slice should have its outline changed. Each figure has its own unique index, see section 2.3 (Pg. 10) for more details. If no figureIndex is passed, the fill applies to all figures in the slice.

### Ioadmask

**loadmask(string** *filepath*) **loadmask** allows for advanced fill control. It enables the user to load a texture from a bitmap file and use it to fill the entirety of a figure with the texture.

**texture** = **loadmask("voronoi_noise.png")**-loading texture. voronoi_noise.png is in the same directory as the script.
**myCircle** = **addCircle(0,0,20,0)-**-creating the circle to fill
**fillmask(texture, 0, myCircle)-**-filling the circle with voronoi noise
- *filepath*: file path to image file

**Returns:** a special data type which can be passed into a **fillmask** or
**linemask** function as the color argument.

### FRAMES

### showframe

**showframe(number** *slicelndex)* **showframe** is essential to the printing process. This function sends the data from a slice to the printer. Call **showframes** on a frame that doesn't exist to render a black frame e.g. **showframe(-1).**

**showframe(2)--**showing the 3rd slice
- *sliceIndex*: the index of the slice to send to the printer.

### framegradient

**framegradient(number** *slope*) **framegradient** is
designed to compensate for differences in light
intensity.

### calcframe

### calcframe()

**calcframe** is designed to analyze the construction of a slice calculates the last frame shown.

### showframe(0)

### calcframe()

**Returns:** the maximum possible distance between any point in the figure and the edge.

### 2.5.4 loadframe

### loadframe(string filepath)

**loadframe** is used to load a single slice
from a supported bitmap file.

**loadframe("slice.png")**--slice.png is in the same directory as the script
- *filepath*: file path to slice image.

### SLICES

### addslice

**addslice(number** *sliceHeight)* **addslice** creates a new slice at a given height at the end of the slice stack.
**addslice(.05)**--adding a slice at .05mm

### addslice(number sliceheight, number slicelndex)

addslice(.05, 2)--adding a slice at .05mm and at index 2. this pushes all layers 2 and higher up an index.

**addslice** creates a new slice at a given height and slice index.
- *sliceHeight*: height, in millimeters, of the slice.
- *sliceIndex*: index at which the slice
should be added. **Returns:** slice
index.

### loadslices

**loadslices(string** *filepath)* **loadslices**
is used to load all the slices
from a 2D slice file.

**loadslices("Chess King.svg")**--loading all the slices from the Chess King.svg file
- *filepath*: file path to the sliced model. Acceptable
   formats are .cli and .svg. **Returns:** number of slices.

### sliceheight

**sliceheight(number** *slicelndex)* **sliceheight** is used to find the height of a slice in
mm off the base.

**addslice(.05,0)**--setting the first slice to .05mm
**sliceheight(0)**--checking the height of slice 0, in this example it should return .05
- *sliceIndex*: index of the slice to check. **Returns:** slice height in mm.2.6.4 slicecontrolpoints
**slicecontrolpoints() slicecontrolpoints** is a helper function which creates a control point for each slice of a model. These control points can be passed to the **moveto** or **moveby** function to set it to callback when the stage reaches the height of each slice. Make sure **loadslices** has been called prior to calling this function.

### loadslices("Chess King.svg")

### controlPoints = slicecontrolpoints()

**Returns:** Lua table of control points.

### TIMING

### Sleep

**sleep(number** *seconds)* **sleep** allows the user to pause the execution of the program for a set number of seconds.

**sleep(.5)--sleeping** for a half second
- *seconds:* number of seconds to pause script execution.

### Clock

**clock() clock** returns the current time in seconds. It is accurate at least up to the millisecond and should therefore be used instead of Lua's built in clock functionality. **clock** should be used as a means to measure differences in time as the start time for the second count varies from system to system.

### t1 = clock()

### loadslices("Chess King.svg")

### deltaTime = clock()-t1

**Returns:** system time in seconds.

### FLUID CONTROL

This set of functions can be used with printer models that support fluid control. Before the script finishes executing, **setlevels(0,0)** should be called to ensure that the pump stops pumping fluid into the vat.

### getcurrentlevel

### getcurrentlevel() getcurrentlevel

returns the percentage of the vat
that is full.

### print( string.format("Vat is %d percent full.", getcurrentlevel()*100) )

**Returns:** a floating point number on the range 0 to 1 that represents the percentage of the vat that is full.

### setlevels

**setlevels(number** *min,* **number** *max)* **setlevels** allows the user to define how much fluid should be in the vat. The fluid height will be automatically regulated by a pump. The difference between *min* and *max* should be greater than 0.05 to ensure that the valve is not constantly opening and closing.

**setlevels(.7,.75)**--keeping vat about 75 percent full
- *min:* the minim percentage of the vat that should be full. Entered as a floating point number from 0 to 1.
   - *max*: the max percentage of the vat that should be full. Entered as a floating point number from 0 to 1.

### User Feedback

### 2.9.1 infoline

**infoline(int** *lineIndex,* **string** *text*) **infoline** allows the user to display up to 5 lines of text in a constant position on the sidebar of the Programmable Printer Platform. This function is often used to allow the user to monitor several changing variables at once.

### infoline(1, string.format("Vat is %d percent full.", getcurrentlevel()*100))

- *lineIndex*: the index of the line. Indexes should be in the range 1 to 5, 1 being the upper most line. *-text:* text to be displayed at line index.

### GLOBAL CONFIGURATION TABLE.

Before a print script is executed, all global variables are loaded into a configuration table called cfg. Most of the data in this table has already been read by the Programmable Printer Platform by the time the users script executes, therefore, changing them will have no effect. However, writing to the *xscale, yscale, zscale, xorig* and *yorig* fields of the cfg, will effect all the **loadslices** and **addlayer** calls that are made afterwards. If the users script is designed to be run at a specific scale and/or position, it is good practice to override the cfg with the correct settings to ensure the scale and position can't be accidentally changed by the Programmable Printer Platform.
**cfg.xscale = 3** --overriding global settings to set scale on the x axis to 3
**cfg.yscale = 2** --overriding global settings to set scale on the y axis to 2
**cfg.zscale = 1** --overriding global settings to set scale on the z axis to 1
**cfg.xorig = -2.0** --overriding global settings to set the origin on the x axis 2mm left
**cfg.yorig = 0.25** --overriding global settings to set the origin on the y axis .25mm in the positive direction

### Fields in cfg:

- *serial port:* name of serial port (changing this variable wont effect code)
- *xscale:* x scale *-yscale*: y scale
- *zscale:* z scale
- *xorig:* x origin *-yorig:* y origin
- *hw xscale*: pixel resolution in x direction (changing this variable won't effect code)
- *hw yscale:* pixel resolution in y direction (changing this variable won't effect code)

### USEFUL LUA STANDARD LIBRARIES.

The math standard library contains several different functions that are useful in calculating geometry. The string object is most useful in printing for manipulating info strings. For details contact LabLua at Departamento de Informática, PUC-Rio, Rua Marquês de São Vicente, 225; 22451-900 Rio de Janeiro, RJ, Brazil

### EXAMPLE 8

### Lua Script Program for Continuous Print

This example shows a Lua script program corresponding to Example 7 above for continuous three dimension printing.

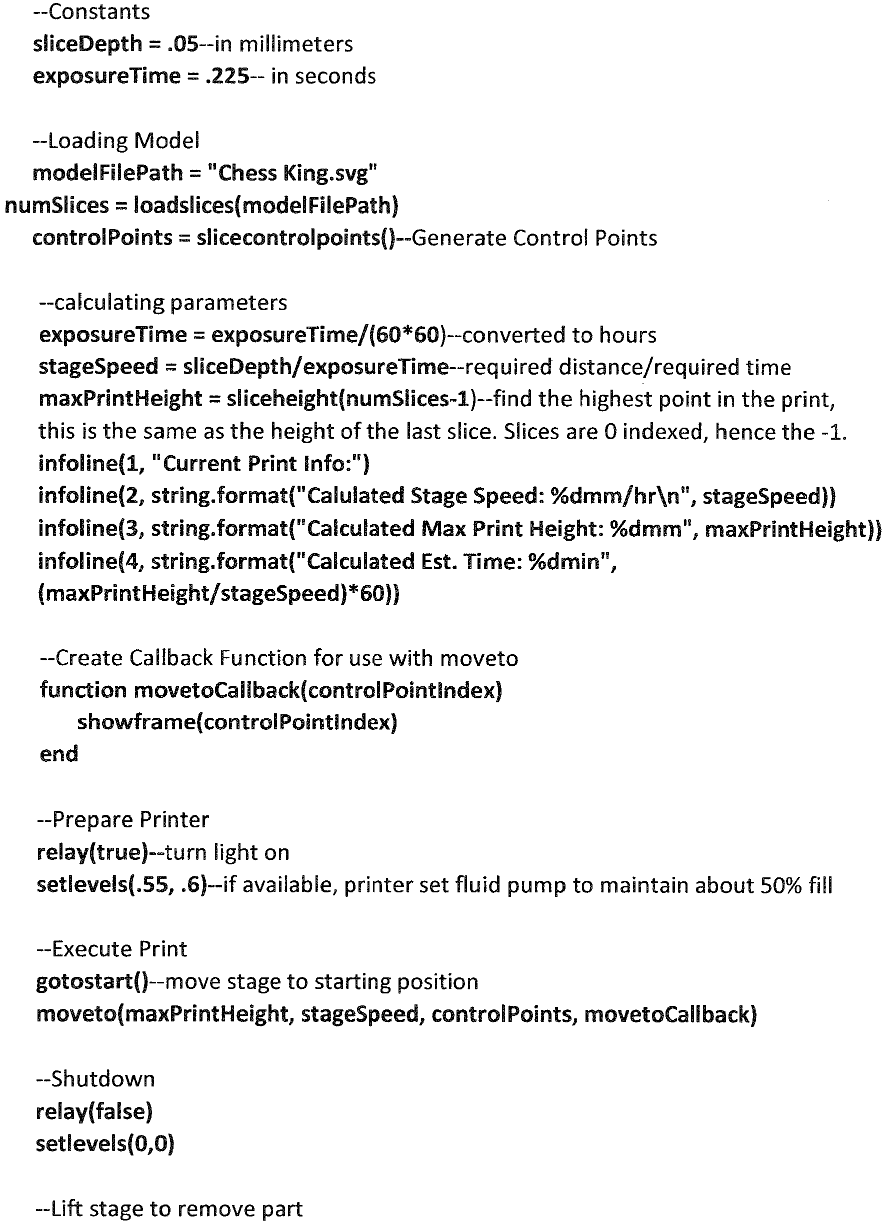

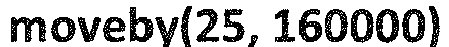

### EXAMPLE 9

### Lua Script Program for Cylinder and Buckle

This example shows a Lua script program for two fitted parts that use procedural geometry.

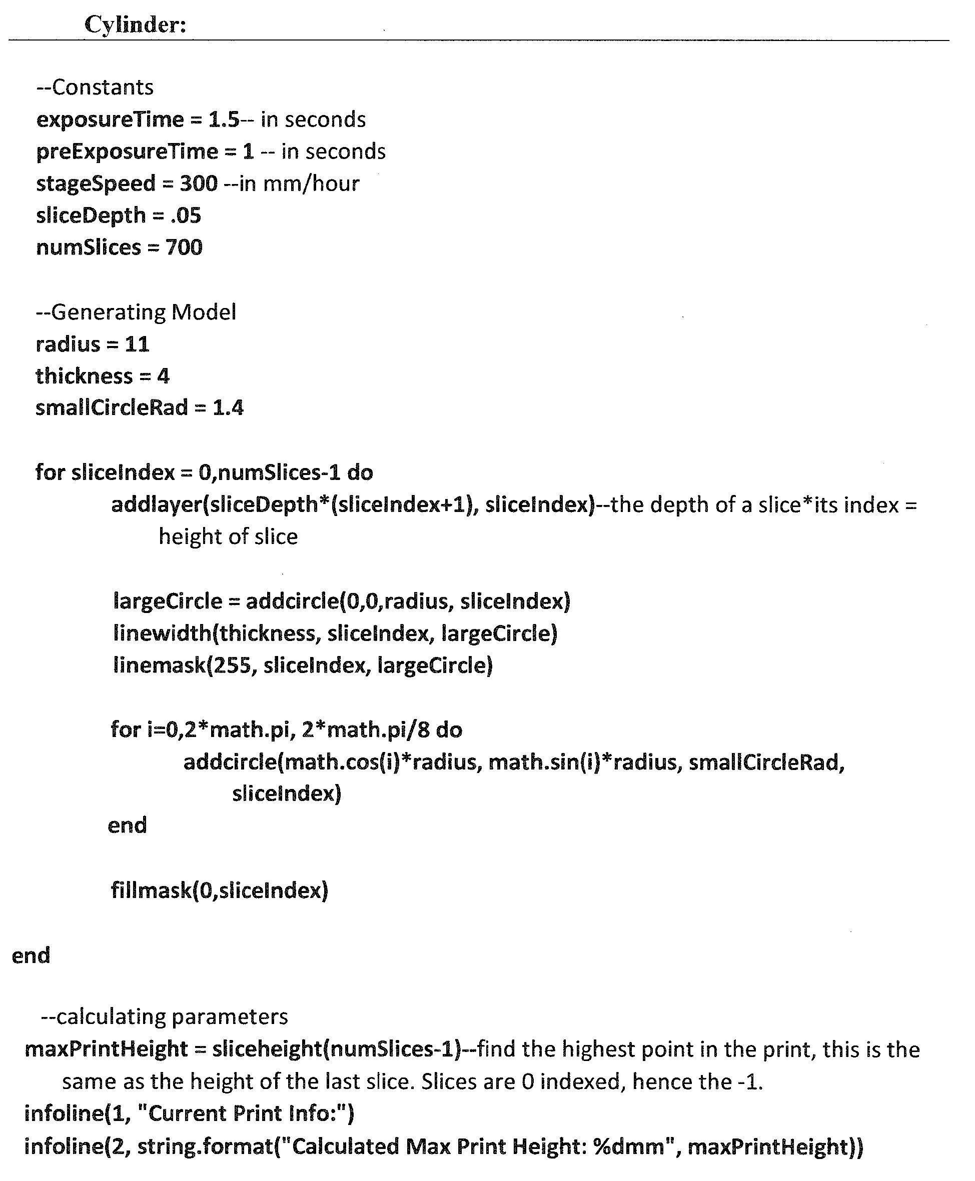

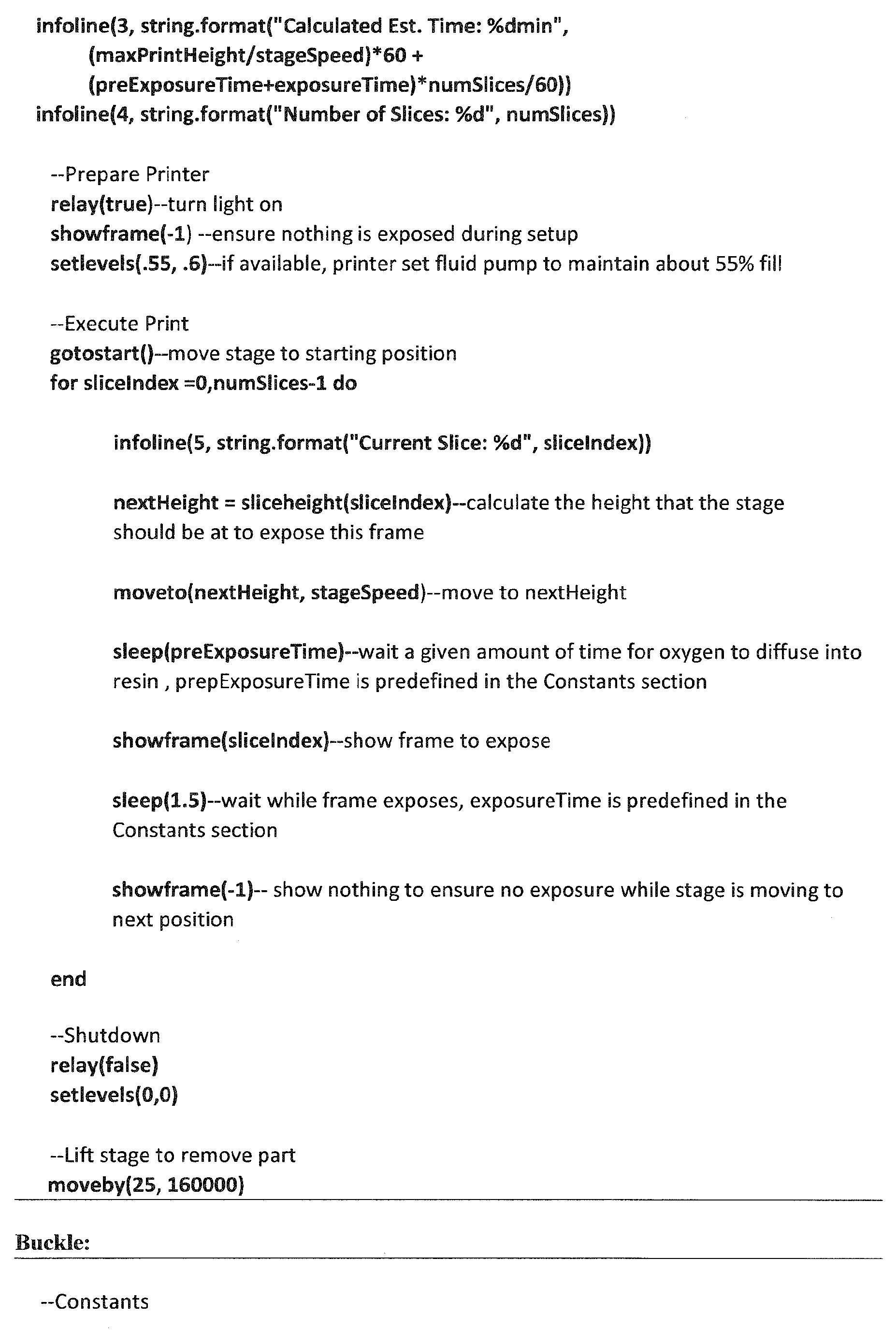

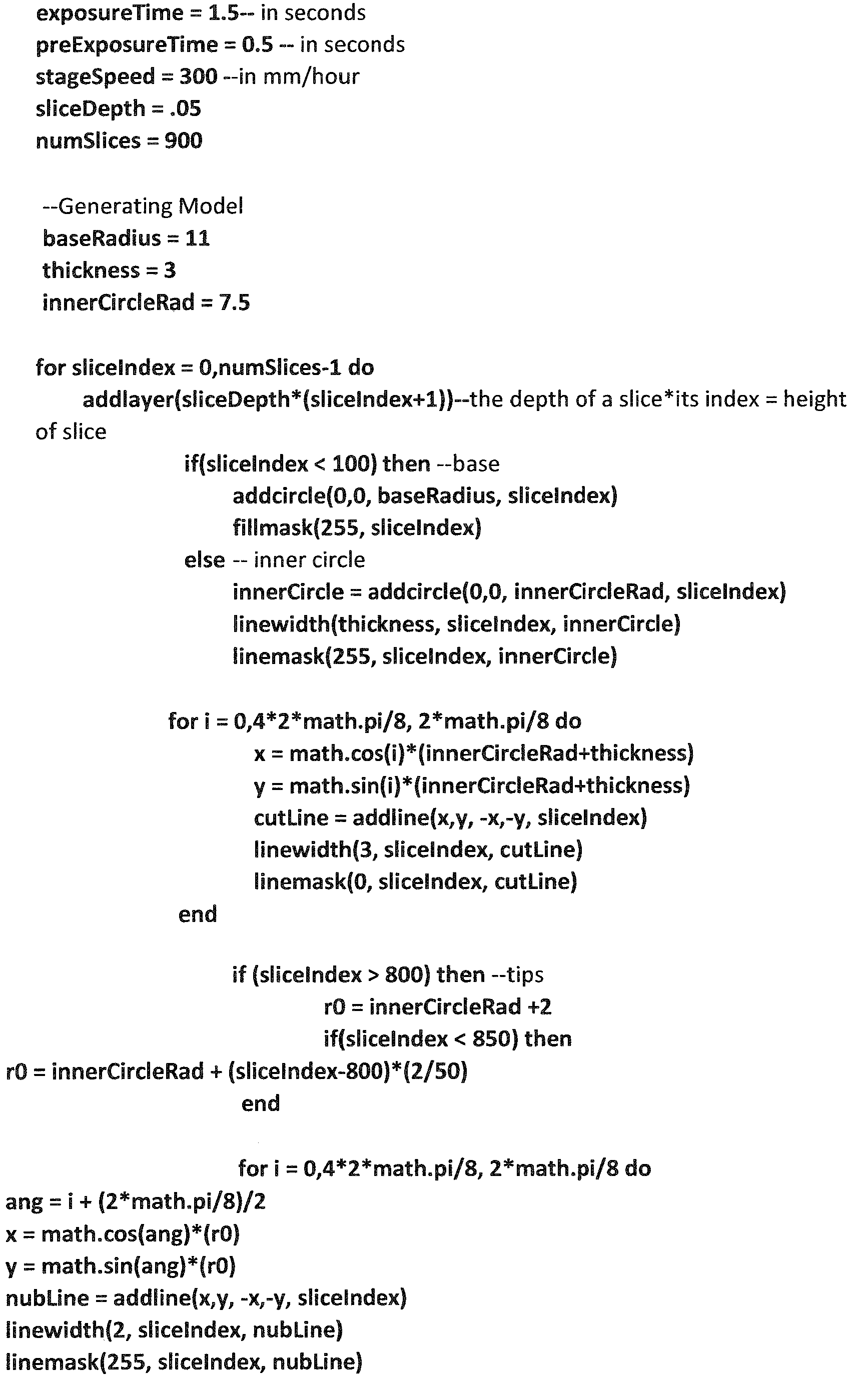

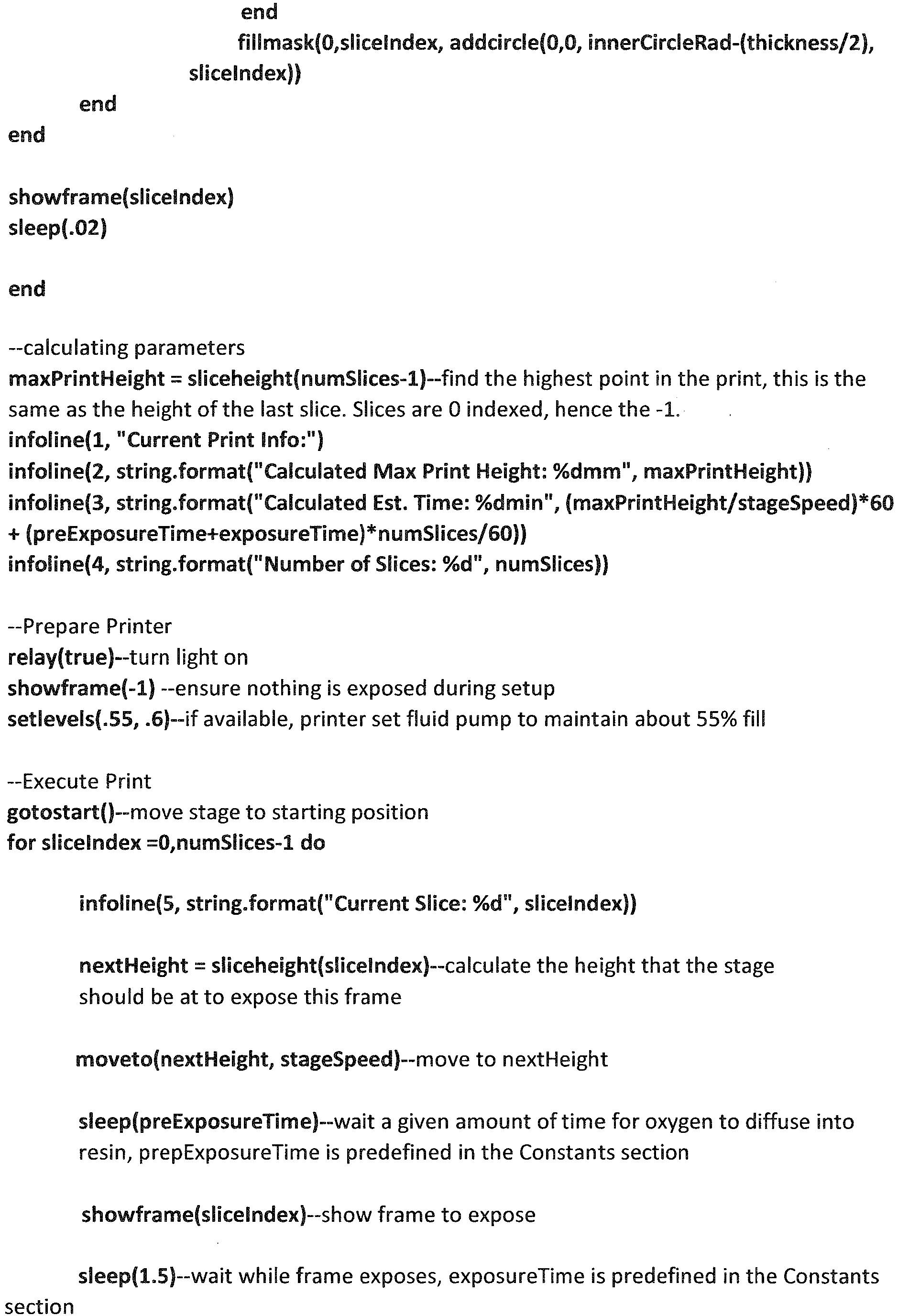

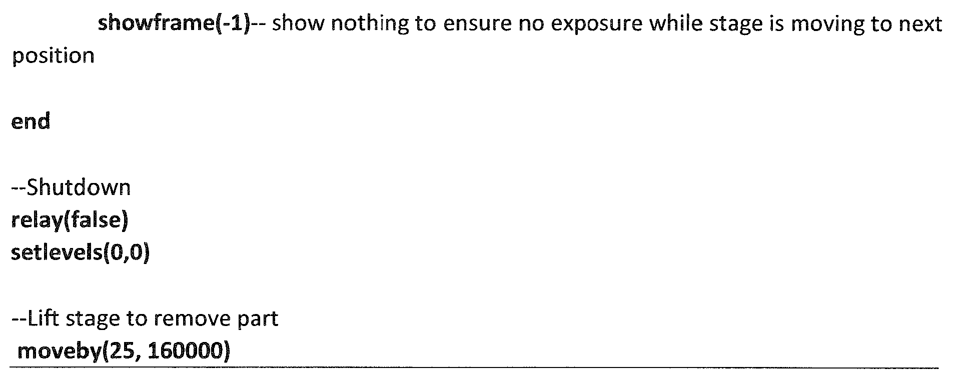

### EXAMPLE 10

### Continuous Fabrication with Intermittent Irradiation and Advancing

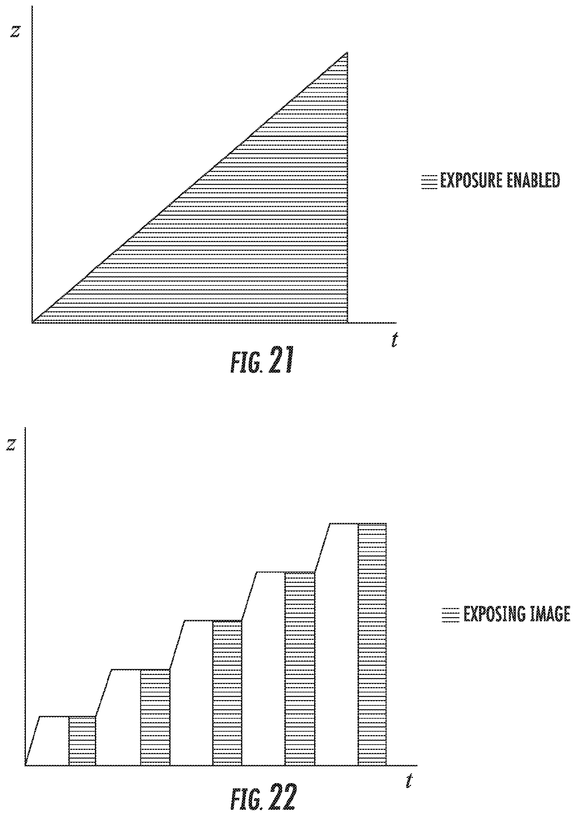

A process of the present invention is illustrated in **Figure 21****,** where the vertical axis illustrates the movement of the carrier away from the build surface. In this embodiment, the vertical movement or advancing step (which can be achieved by driving either the carrier or the build surface, preferably the carrier), is continuous and unidirectional, and the irradiating step is carried out continuously. Polymerization of the article being fabricated occurs from a gradient of polymerization, and hence creation of "layer by layer" fault lines within the article is minimized.

An alternate embodiment of the present invention is illustrated in **Figure 22****.** In this embodiment, the advancing step is carried out in a step-by-step manner, with pauses introduced between active advancing of the carrier and build surface away from one another. In addition, the irradiating step is carried out intermittently, in this case during the pauses in the advancing step. We find that, as long as the inhibitor of polymerization is supplied to the dead zone in an amount sufficient to maintain the dead zone and the adjacent gradient of polymerization during the pauses in irradiation and/or advancing, the gradient of polymerization is maintained, and the formation of layers within the article of manufacture is minimized or avoided. Stated differently, the polymerization is continuous, even though the irradiating and advancing steps are not. Sufficient inhibitor can be supplied by any of a variety of techniques, including but not limited to: utilizing a transparent member that is sufficiently permeable to the inhibitor, enriching the inhibitor (*e.g*., feeding the inhibitor from an inhibitor-enriched and/or pressurized atmosphere), etc. In general, the more rapid the fabrication of the three-dimensional object (that is, the more rapid the cumulative rate of advancing), the more inhibitor will be required to maintain the dead zone and the adjacent gradient of polymerization.

### EXAMPLE 11

### Continuous Fabrication with Reciprocation During

### Advancing to Enhance Filling of Build Region with Polymerizable Liquid

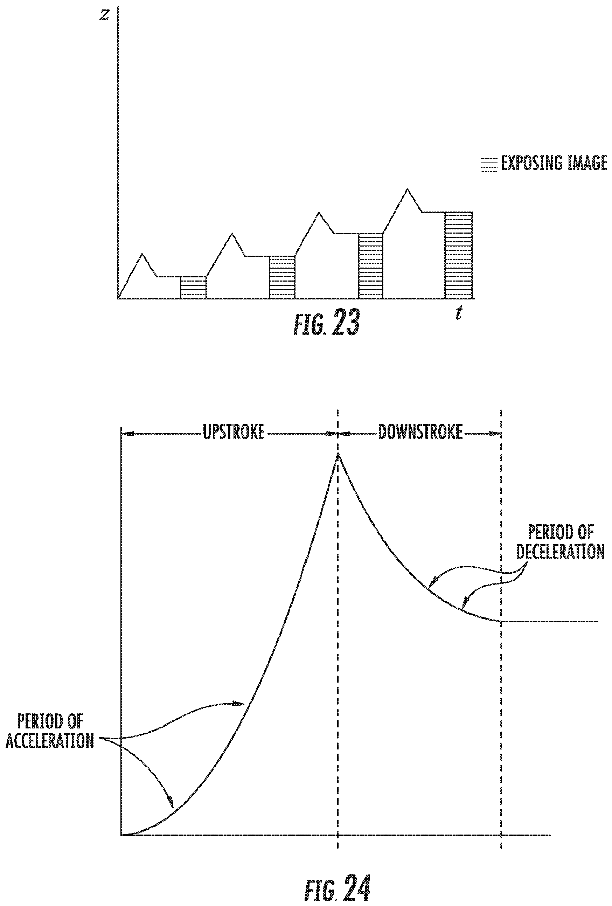

A still further embodiment of the present invention is illustrated in Figure 23. As in Example 10 above, this embodiment, the advancing step is carried out in a step-by-step manner, with pauses introduced between active advancing of the carrier and build surface away from one another. Also as in Example 10 above, the irradiating step is carried out intermittently, again during the pauses in the advancing step. In this example, however, the ability to maintain the dead zone and gradient of polymerization during the pauses in advancing and irradiating is taken advantage of by introducing a vertical reciprocation during the pauses in irradiation.

We find that vertical reciprocation (driving the carrier and build surface away from and then back towards one another), particularly during pauses in irradiation, serves to enhance the filling of the build region with the polymerizable liquid, apparently by pulling polymerizable liquid into the build region. This is advantageous when larger areas are irradiated or larger parts are fabricated, and filling the central portion of the build region may be rate-limiting to an otherwise rapid fabrication.

Reciprocation in the vertical or Z axis can be carried out at any suitable speed in both directions (and the speed need not be the same in both directions), although it is preferred that the speed when reciprocating away is insufficient to cause the formation of gas bubbles in the build region.

While a single cycle of reciprocation is shown during each pause in irradiation in Figure 23, it will be appreciated that multiple cycles (which may be the same as or different from one another) may be introduced during each pause.

As in Example 10 above, as long as the inhibitor of polymerization is supplied to the dead zone in an amount sufficient to maintain the dead zone and the adjacent gradient of polymerization during the reciprocation, the gradient of polymerization is maintained, the formation of layers within the article of manufacture is minimized or avoided, and the polymerization/fabrication remains continuous, even though the irradiating and advancing steps are not.

### EXAMPLE 12

### Acceleration during Reciprocation Upstroke and

### Deceleration during Reciprocation Downstroke to Enhance Part Quality

We observe that there is a limiting speed of upstroke , and corresponding downstroke, which if exceeded causes a deterioration of quality of the part or object being fabricated (possibly due to degradation of soft regions within the gradient of polymerization caused by lateral shear forces a resin flow). To reduce these shear forces and/or enhance the quality of the part being fabricated, we introduce variable rates within the upstroke and downstroke, with gradual acceleration occurring during the upstroke and gradual deceleration occurring during the downstroke, as schematically illustrated in **Figure 24****.**

### EXAMPLE 13

### Fabrication of Hollow Object

Three dimensional objects with large solid cross sections can be difficult to print quickly due to forces required to pull resin into the build zone. Objects with large cross sections that are hollow have the potential to be easier to build. However, without a path for fluid and/or gas to flow out of the hollow chamber, these objects face similar difficulties to solid parts when being built. This includes failure modes such as the build surface, being pulled upward and snapping back down, and/or failure of the object wall (e.g., inward collapse), as shown in **Figure 25****.** Note that, while Figure 25 shows failure of the object wall late in the production of the three dimensional object, failure may also occur early in the production of the three-dimensional object, as illustrated further below.

### EXAMPLE 14

### Fabrication of Hollow Object with Breathing Orifice

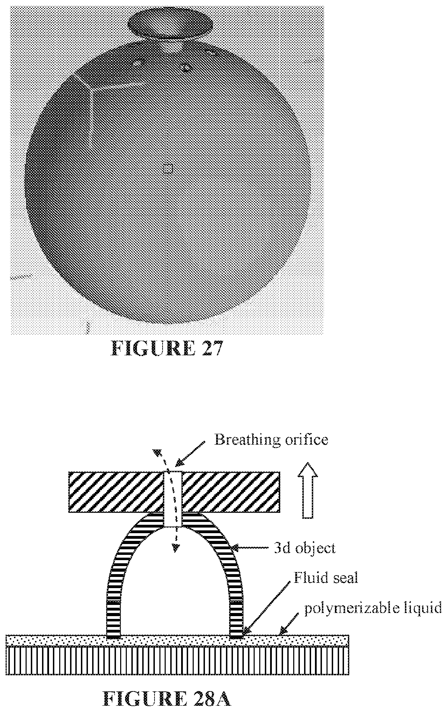

As shown in **Figure 26****,** formation of one or more breathing orifice near the carrier of an object being produced allows flow of fluid and/or gas from the hollow interior of the cavity to the exterior (dashed arrow). Such openings can assist in preservation of part integrity, speed of production, and/or high part fidelity. A perspective view of such an object is given in **Figure 27****.**

### EXAMPLE 15

### Fabrication of Hollow Object with Breathing Orifices in both Object and Carrier

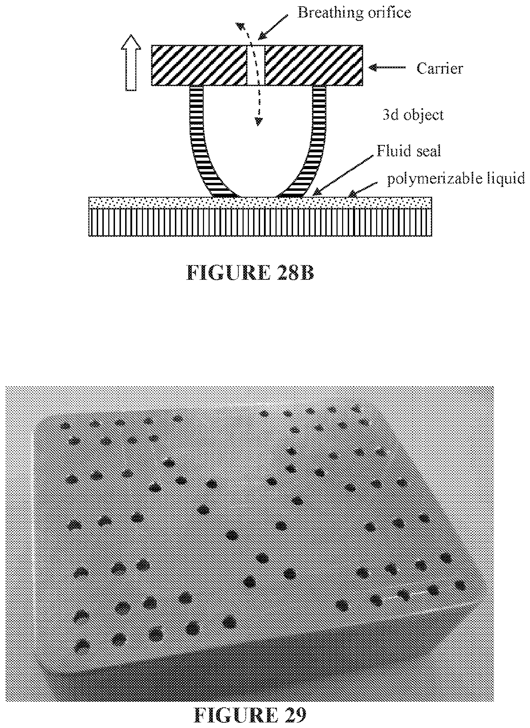

Note that the breathing orifice can provide direct access to the ambient atmosphere (*e.g.,* air) as shown in Figure 26, or can be aligned with a corresponding breathing orifice in the carrier as shown in **Figure 28A** (or combinations thereof). Where the finished object has an open base which can be oriented adjacent the carrier during fabrication, the open base can itself serve as the breathing orifice for the object when it is aligned with one or more breathing orifices in the carrier, as shown in **Figure 28B****.** An example of such a carrier is given in **Figure 29****.**

### EXAMPLE 16

### Fabrication of Open Hollow Cannula Part

### with Breathing Orifices in both Object and Carrier

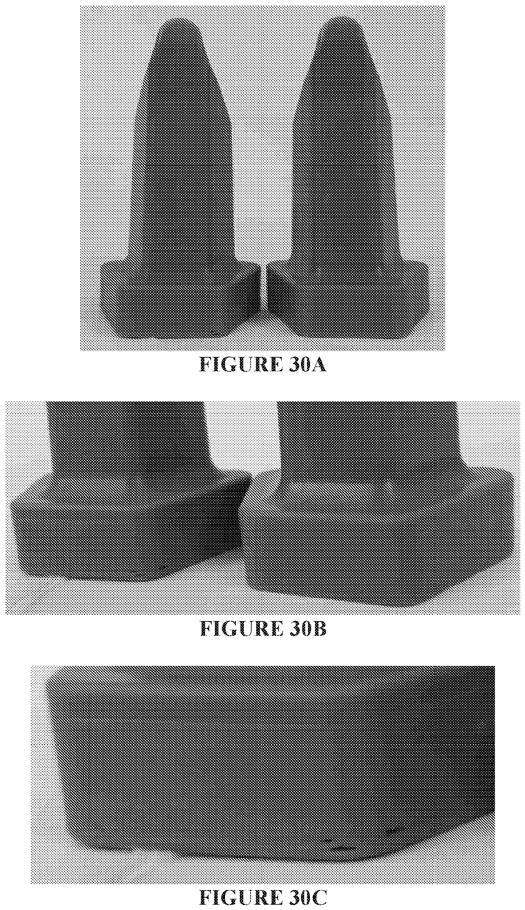

The pair of cannula parts shown in **Figure 30A** are examples of a tubular object with a hollow cavity. Orienting the part so that the large, flat, open, cross-section at the bottom of the part is flush with and adjacent to the carrier allows that opening to serve as the breathing orifice in the object, where a carrier having corresponding breathing openings such as shown in **Figure 29** is used. In this case, note that printing in a different orientation may avoid the otherwise damaging vacuum effect, but would come at the cost of the part being prone to warping and being heavily supported, which extends the pre- and post-processing work. In order to print the cannula without modifying the part itself, the carrier shown in Figure 29, with breathing orifices formed therein, is used.

In **Figure 30A****,** the part on the left was printed on a standard carrier without breathing orifices, and the part on the right was printed on a carrier having breathing orificies as shown in Figure 29. The close-up provided in **Figure 30B** shows unwanted air passageways being forced into the part on the left, but not into the part on the right. The close-up in **Figure 30C** clearly shows the unwanted air passageways forced into the hollow part.

### EXAMPLE 17

### Fabrication of Hollow Object with

### Polymerizable Liquid Supply through Carrier to Internal Cavity

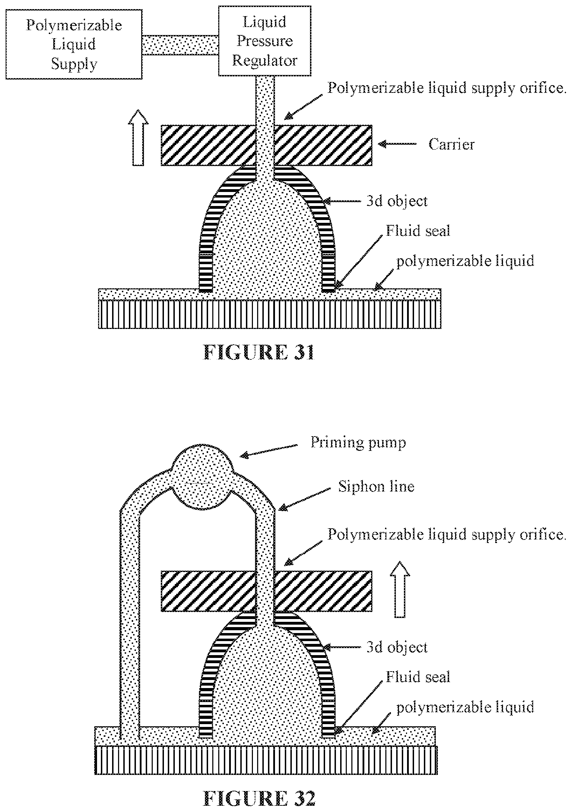

In our copending application, J. DeSimone et al., *Method and Apparatus for Three-Dimensional Fabrication with Feed Through Carrier* (WO 2014/126834), the supply of polymerizable liquid through a part is described (See particularly Figures 27-28 and Examples 22-25 therein). As shown in **Figure 31** herein, a hollow three-dimensional object (for example, one having an internal cavity volume equal to at least 50, 60, 70 or 80 percent of the total volume of the three-dimensional object), the supply of polymerizable liquid to the internal cavity is through a pressure regulator to reduce the potential for rupturing of the three-dimensional object during production thereof. Any suitable liquid pressure regulator may be used, with the specific liquid pressure being set in accordance with the geometry of the particular three-dimensional object being produced, optionally adjustable in response to the ambient pressure. For example, the polymerizable liquid supply can in some embodiments be pressurized with a regulated pressure in a range from .01 atmospheres above ambient pressure to 10 atmospheres above ambient pressure, or pumped in controlled volumes in increments from 0.001ml to 100ml for a given increment of advancement of the build platform from lum to 1000um, or at controlled rates in the range of 0.001ml/minute to 1000ml/minute for a given rate of advancement of the build platform from 1 um per minute to 10000um per minute, all generally dependent on the cross section of the part to be built. Where the ambient pressure in which the part is produced is elevated above atmospheric pressure, regulation and control can be provided to substantially equilibrate the pressure external and internal to the part.

**Figure 32** provides an alternative to the apparatus shown in Figure 31, the polymerizable liquid supply to the internal cavity is achieved by providing a siphon line or siphon tube assembly extending from a liquid pool of polymerizable liquid maintained on the build surface through to the breathing hole or holes formed in the carrier. A manual or automatic priming pump may be included in the siphon line to prime the line in accordance with known techniques prior to initiating polymerization and fabrication of the object. The siphon line preferably includes at least one flexible or extendible portion, such as a flexible (optionally coiled) polymer tube, to accommodate upward movement of the carrier away from the build surface on which the pool of polymerizable liquid is maintained.

The foregoing is illustrative of the present invention, and is not to be construed as limiting thereof. The invention is defined by the following claims.

## Claims

1. A method of forming a three-dimensional object, said object having a wall and an internal cavity, with said wall having an upper portion and a lower portion, the method comprising the steps of:
providing a carrier and an optically transparent member having a build surface, said carrier and said build surface defining a build region therebetween;
filling said build region with a polymerizable liquid,
continuously or intermittently irradiating said build region with light through said optically transparent member to form a solid polymer from said polymerizable liquid,
continuously or intermittently advancing said carrier away from said build surface to form said three-dimensional object from said solid polymer,
said method further comprising the step of forming a breathing orifice in said wall upper portion while forming said three-dimensional object, wherein:
said filling step further comprises vertically reciprocating said carrier with respect to said build surface to enhance or speed the refilling of said build region with said polymerizable liquid.

2. The method of claim 1, wherein:
said internal cavity has a volume of at least 1 or 2, or 10 or 20, cubic centimeters; and/or
said wall has at least one region with a maximum thickness of not more than 2 or 4 millimeters, or 1 or 2 centimeters.

3. The method of claim 1 or 2, wherein said filling step is carried out by providing a liquid pool of polymerizable liquid on said build surface, said liquid pool creating a fluid seal that seals said internal cavity to said build surface during said advancing.

4. The method of any one of claims 1 to 3, wherein said breathing orifice comprises a simple port or a labyrinthine port.

5. The method of any one of claims 1 to 4, further comprising, after forming said three-dimensional object, the step of:
sealing said breathing orifice.

6. The method of any one of claims 1 to 4, further comprising, after forming said three-dimensional object, the step of:
separating said lower portion from at least that segment of said upper portion in which said breathing orifice is formed.

7. The method of any one of claims 1 to 6, wherein the volume of said internal cavity is at least 50 or 60 percent of the total volume of said three-dimensional object.

8. The method of any one of claims 1 to 7, wherein said breathing orifice in said object is in fluid communication with a breathing orifice formed in said carrier.

9. The method of any one of claims 1 to 8, wherein said breathing orifice in said object is in fluid communication with the ambient atmosphere in which said three-dimensional object is produced.

10. The method of claim 9, wherein said ambient atmosphere is pressurized.

11. The method of claim 8, or claim 9 or 10 depending from claim 8, wherein said breathing orifice in said carrier is in fluid communication with a polymerizable liquid supply through a liquid pressure regulator.

12. The method of any one of claims 1 to 8, wherein said filling step is carried out with a pool of polymerizable liquid, and said breathing orifice in said carrier and/or in said object is in fluid communication with said polymerizable liquid through a siphon interconnecting said pool and said breathing orifice in said carrier.

13. The method of any preceding claim, wherein said optically transparent member is comprised of a semipermeable fluoropolymer, a rigid gas-permeable polymer, porous glass, or a combination thereof.

14. The method of any preceding claim, wherein said build surface is fixed and stationary in lateral (X and Y) dimensions.

15. The method of any one of claims 1 to 11, wherein said filling, irradiating, and/or advancing steps are carried out while also concurrently:
(i) continuously maintaining a dead zone of polymerizable liquid in contact with said build surface, and
(ii) continuously maintaining a gradient of polymerization zone between said dead zone and said solid polymer and in contact with each thereof, said gradient of polymerization zone comprising said polymerizable liquid in partially cured form.

16. The method of claim 15, wherein said optically transparent member comprises a semipermeable member, and said continuously maintaining a dead zone is carried out by feeding an inhibitor of polymerization through said optically transparent member in an amount sufficient to maintain said dead zone and said gradient of polymerization.

17. The method of claim 15 or 16, wherein said gradient of polymerization zone is maintained for a time of at least 5, 10, 20, or 30 seconds, or at least 1 or 2 minutes.

18. The method of any preceding claim, wherein:
said polymerizable liquid comprises a free radical polymerizable liquid and said inhibitor comprises oxygen; or
said polymerizable liquid comprises an acid-catalyzed or cationically polymerizable liquid, and said inhibitor comprises a base.

19. An apparatus for forming a three-dimensional object from a polymerizable liquid, comprising:
(a) a support;
(b) a carrier operatively associated with said support on which carrier said three-dimensional object is formed, said carrier having at least one breathing orifice formed therein;
(c) an optically transparent member having a build surface, with said build surface and said carrier defining a build region therebetween;
(d) a liquid polymer supply operatively associated with said build surface and configured to supply liquid polymer into said build region for solidification or polymerization;
(e) a radiation source configured to irradiate said build region through said optically transparent member to form a solid polymer from said polymerizable liquid;
(f) optionally at least one drive operatively associated with either said transparent member or said carrier;
(g) a controller operatively associated with said carrier, and/or optionally said at least one drive, and said radiation source for advancing said carrier away from said build surface to form said three-dimensional object from said solid polymer, wherein:
said controller is further configured to vertically reciprocate said carrier with respect to said build surface to enhance or speed the refilling of said build region with said polymerizable liquid.

20. The apparatus of claim 19, further comprising a siphon line connected to said breathing orifice and configured to interconnect said breathing orifice with said liquid polymer supply.

21. The apparatus of claim 19 or 20, further comprising
a polymerizable liquid supply in fluid communication with said breathing orifice, and
a liquid pressure regulator operatively associated with said breathing orifice and said polymerizable liquid supply.

22. The apparatus of any one of claims 19 to 21, said controller further configured to form said three-dimensional object from said solid polymer while also concurrently with said supplying, advancing, and/or irradiating: (i) continuously maintaining a dead zone of polymerizable liquid in contact with said build surface, and (ii) continuously maintaining a gradient of polymerization zone between said dead zone and said solid polymer and in contact with each thereof, said gradient of polymerization zone comprising said polymerizable liquid in partially cured form

23. The apparatus of any one of claims 19 to 22, wherein said build surface is fixed and stationary in lateral (X and Y) dimensions.

24. The apparatus of any one of claims 19 to 23, wherein said optically transparent member comprises a semipermeable member.

## Patentansprüche

1. Verfahren zum Bilden eines dreidimensionalen Objekts, wobei das Objekt eine Wand und einen inneren Hohlraum aufweist, wobei die Wand einen oberen Abschnitt und einen unteren Abschnitt aufweist, das Verfahren umfassend die folgenden Schritte:
Bereitstellen eines Trägers und eines optisch transparenten Elements, das eine Baufläche aufweist, wobei der Träger und die Baufläche eine Bauregion dazwischen definieren; Füllen der Bauregion mit einer polymerisierbaren Flüssigkeit,
kontinuierliches oder intermittierendes Bestrahlen der Bauregion mit Licht durch das optisch transparente Element, um aus der polymerisierbaren Flüssigkeit ein festes Polymer zu bilden,
kontinuierliches oder intermittierendes Vorwärtsbewegen des Trägers weg von der Baufläche, um das dreidimensionale Objekt aus dem festen Polymer zu bilden,
das Verfahren ferner umfassend den Schritt eines Bildens einer Atmungsöffnung in dem oberen Wandabschnitt, während das dreidimensionale Objekt gebildet wird, wobei:
der Füllschritt ferner ein vertikales Hin- und Herbewegen des Trägers in Bezug auf die Baufläche umfasst, um das Auffüllen der Bauregion mit der polymerisierbaren Flüssigkeit zu verbessern oder zu beschleunigen.

2. Verfahren nach Anspruch 1, wobei:
der innere Hohlraum ein Volumen von mindestens 1 oder 2 oder 10 oder 20 Kubikzentimetern aufweist; und/oder
die Wand mindestens eine Region mit einer maximalen Stärke von nicht mehr als 2 oder 4 Millimetern oder 1 oder 2 Zentimetern aufweist.

3. Verfahren nach Anspruch 1 oder 2, wobei der Füllschritt ausgeführt wird, indem ein Flüssigkeitspool aus polymerisierbarer Flüssigkeit auf der Baufläche bereitgestellt wird, wobei der Flüssigkeitspool eine Fluiddichtung erzeugt, die den inneren Hohlraum zu der Baufläche während des Vorwärtsbewegens abdichtet.

4. Verfahren nach einem der Ansprüche 1 bis 3, wobei die Atmungsöffnung eine einfache Öffnung oder eine labyrinthartige Öffnung umfasst.

5. Verfahren nach einem der Ansprüche 1 bis 4, ferner umfassend den folgenden Schritt nach Bilden des dreidimensionalen Objekts:
Abdichten der Atmungsöffnung.

6. Verfahren nach einem der Ansprüche 1 bis 4, ferner umfassend den folgenden Schritt nach Bilden des dreidimensionalen Objekts:
Trennen des unteren Abschnitts von mindestens dem Segment des oberen Abschnitts, in dem die Atmungsöffnung gebildet wird.

7. Verfahren nach einem der Ansprüche 1 bis 6, wobei das Volumen des inneren Hohlraums mindestens 50 oder 60 Prozent des Gesamtvolumens des dreidimensionalen Objekts ist.

8. Verfahren nach einem der Ansprüche 1 bis 7, wobei die Atmungsöffnung in dem Objekt in Fluidverbindung mit einer Atmungsöffnung ist, die in dem Träger gebildet ist.

9. Verfahren nach einem der Ansprüche 1 bis 8, wobei die Atmungsöffnung in dem Objekt in Fluidverbindung mit der Umgebungsatmosphäre ist, in der das dreidimensionale Objekt hergestellt wird.

10. Verfahren nach Anspruch 9, wobei die Umgebungsatmosphäre unter Druck gesetzt ist.

11. Verfahren nach Anspruch 8 oder nach Anspruch 9 oder 10 abhängig von Anspruch 8, wobei die Atmungsöffnung in dem Träger durch einen Flüssigkeitsdruckregler in Fluidverbindung mit einer Zuführung von polymerisierbarer Flüssigkeit ist.

12. Verfahren nach einem der Ansprüche 1 bis 8, wobei der Füllschritt mit einem Pool von polymerisierbarer Flüssigkeit durchgeführt wird und die Atmungsöffnung in dem Träger und/oder in dem Objekt durch einen Siphon, der den Pool und die Atmungsöffnung in dem Träger miteinander verbindet, in Fluidverbindung mit der polymerisierbaren Flüssigkeit ist.

13. Verfahren nach einem der vorhergehenden Ansprüche, wobei das optisch transparente Element aus einem halbdurchlässigen Fluorpolymer, einem starren gasdurchlässigen Polymer, porösem Glas oder einer Kombination davon besteht.

14. Verfahren nach einem vorherigen Anspruchs, wobei die Baufläche in seitlichen Dimensionen (X und Y) fest und stationär ist.

15. Verfahren nach einem der Ansprüche 1 bis 11, wobei die Füll-, Bestrahlungs- und/oder Vorwärtsbewegungsschritte durchgeführt werden, während auch gleichzeitig:
(i) kontinuierlich eine tote Zone von polymerisierbarer Flüssigkeit in Kontakt mit der Baufläche aufrechterhalten wird, und
(ii) kontinuierlich ein Gradient der Polymerisationszone zwischen der toten Zone und dem festen Polymer und in Kontakt mit jedem davon aufrechterhalten wird, wobei der Gradient der Polymerisationszone umfassend die polymerisierbare Flüssigkeit in teilweise gehärteter Form.

16. Verfahren nach Anspruch 15, wobei das optisch transparente Element ein halbdurchlässiges Element umfasst und das kontinuierliche Aufrechterhalten einer toten Zone durch Zuführen eines Polymerisationsinhibitors durch das optisch transparente Element in einer Menge durchgeführt wird, die ausreichend ist, um die tote Zone und den Polymerisationsgradienten aufrechtzuerhalten.

17. Verfahren nach Anspruch 15 oder 16, wobei der Gradient der Polymerisationszone für eine Zeit von mindestens 5, 10, 20 oder 30 Sekunden oder mindestens 1 oder 2 Minuten aufrechterhalten wird.

18. Verfahren nach einem vorherigen Anspruch, wobei:
die polymerisierbare Flüssigkeit eine freie radikalische polymerisierbare Flüssigkeit umfasst und der Inhibitor Sauerstoff umfasst; oder
die polymerisierbare Flüssigkeit eine säurekatalysierte oder kationisch polymerisierbare Flüssigkeit umfasst und der Inhibitor eine Base umfasst.

19. Vorrichtung zum Formen eines dreidimensionalen Objekts aus einer polymerisierbaren Flüssigkeit, umfassend:
(a) einen Träger;
(b) einen Träger, der funktionsfähig mit dem Träger assoziiert ist, auf dem das dreidimensionale Objekt gebildet wird, wobei der Träger mindestens eine darin ausgebildete Atmungsöffnung aufweist;
(c) ein optisch transparentes Element, das eine Baufläche aufweist, wobei die Baufläche und der Träger eine Bauregion dazwischen definieren;
(d) eine Flüssigpolymer-Zuführung, die funktionsfähig mit der Baufläche assoziiert und konfiguriert ist, um Flüssigpolymer zur Verfestigung oder Polymerisation in die Bauregion zuzuführen;
(e) eine Strahlungsquelle, die konfiguriert ist, um die Bauregion durch das optisch transparente Element zu bestrahlen, um aus der polymerisierbaren Flüssigkeit ein festes Polymer zu bilden;
(f) optional mindestens einen Antrieb, der entweder mit dem transparenten Element oder dem Träger operativ verbunden ist;
(g) eine Steuerung, die dem Träger und/oder optional dem mindestens einen Antrieb und der Strahlungsquelle funktionsfähig assoziiert ist, um den Träger weg von der Baufläche vorwärts zu bewegen, um das dreidimensionale Objekt aus dem festen Polymer zu bilden, wobei:
die Steuerung ferner konfiguriert ist, um den Träger in Bezug auf die Baufläche vertikal hin- und herzubewegen, um das Auffüllen der Bauregion mit der polymerisierbaren Flüssigkeit zu verbessern oder zu beschleunigen.

20. Vorrichtung nach Anspruch 19, ferner umfassend eine Siphonleitung, die mit der Atmungsöffnung verbunden und konfiguriert ist, um die Atmungsöffnung mit der Flüssigpolymerzufuhr zu verbinden.

21. Vorrichtung nach Anspruch 19 oder 20, ferner umfassend
eine Zuführung von polymerisierbarer Flüssigkeit in Fluidverbindung mit der Atmungsöffnung, und
einen Flüssigkeitsdruckregler, der funktionsfähig mit der genannten Atemöffnung und der Zuführung von polymerisierbarer Flüssigkeit verbunden ist.

22. Vorrichtung nach einem der Ansprüche 19 bis 21, wobei die Steuereinheit ferner konfiguriert ist, um das dreidimensionale Objekt aus dem festen Polymer zu bilden, während gleichzeitig mit dem Zuführen, Vorwärtsbewegen und/oder Bestrahlen: (i) kontinuierlich eine tote Zone von polymerisierbarer Flüssigkeit in Kontakt mit der Baufläche aufrechterhalten wird, und (ii) kontinuierlich ein Gradient der Polymerisationszone zwischen der toten Zone und dem festen Polymer und in Kontakt mit jedem davon aufrechterhalten wird, wobei der Gradient der Polymerisationszone umfassend die polymerisierbare Flüssigkeit in teilweise gehärteter Form.

23. Vorrichtung nach einem der Ansprüche 19 bis 22, wobei die Baufläche in seitlichen Dimensionen (X und Y) fest und stationär ist.

24. Vorrichtung nach einem der Ansprüche 19 bis 23, wobei das optisch transparente Element ein halbdurchlässiges Element umfasst.

## Revendications

1. Procédé de formation d'un objet tridimensionnel, ledit objet ayant une paroi et une cavité interne, ladite paroi ayant une partie supérieure et une partie inférieure, le procédé comprenant les étapes de :
fourniture d'un support et d'un élément optiquement transparent ayant une surface de construction, ledit support et ladite surface de construction définissant une zone de construction entre eux ;
remplissage de ladite zone de construction avec un liquide polymérisable ;
irradiation continue ou intermittente de ladite zone de construction avec une lumière à travers ledit élément optiquement transparent pour former un polymère solide à partir dudit liquide polymérisable,
avancement continu ou intermittent dudit support en éloignement de ladite surface de construction pour former ledit objet tridimensionnel à partir dudit polymère solide,
ledit procédé comprenant en outre l'étape de formation d'un orifice de respiration dans ladite partie supérieure de paroi pendant la formation dudit objet tridimensionnel, dans lequel :
ladite étape de remplissage comprend en outre le déplacement en va-et-vient verticalement dudit support par rapport à ladite surface de construction pour améliorer ou accélérer le remplissage de ladite zone de construction avec ledit liquide polymérisable.

2. Procédé selon la revendication 1, dans lequel :
ladite cavité interne a un volume d'au moins 1 ou 2, ou 10 ou 20 centimètres cubes ;
et / ou
ladite paroi présente au moins une zone d'une épaisseur maximale ne dépassant pas 2 ou 4 millimètres, ou 1 ou 2 centimètres.

3. Procédé selon la revendication 1 ou 2, dans lequel ladite étape de remplissage est réalisée en fournissant un bain liquide de liquide polymérisable sur ladite surface de construction, ledit bain liquide créant un joint de fluide qui scelle ladite cavité interne à ladite surface de construction pendant ledit avancement.

4. Procédé selon l'une quelconque des revendications 1 à 3, dans lequel ledit orifice de respiration comprend un orifice simple ou un orifice labyrinthique.

5. Procédé selon l'une quelconque des revendications 1 à 4, comprenant en outre, après la formation dudit objet tridimensionnel, l'étape de :
scellement dudit orifice de respiration.

6. Procédé selon l'une quelconque des revendications 1 à 4, comprenant en outre, après la formation dudit objet tridimensionnel, l'étape de :
séparation de ladite partie inférieure d'au moins ce segment de ladite partie supérieure dans lequel ledit orifice de respiration est formé.

7. Procédé selon l'une quelconque des revendications 1 à 6, dans lequel le volume de ladite cavité interne est d'au moins 50 ou 60 pour cent du volume total dudit objet tridimensionnel.

8. Procédé selon l'une quelconque des revendications 1 à 7, dans lequel ledit orifice de respiration dans ledit objet est en communication fluidique avec un orifice de respiration formé dans ledit support.

9. Procédé selon l'une quelconque des revendications 1 à 8, dans lequel ledit orifice de respiration dans ledit objet est en communication fluidique avec l'atmosphère ambiante dans laquelle ledit objet tridimensionnel est produit.

10. Procédé selon la revendication 9, dans lequel ladite atmosphère ambiante est pressurisée.

11. Procédé selon la revendication 8, ou la revendication 9 ou 10 dépendant de la revendication 8, dans lequel ledit orifice de respiration dans ledit support est en communication fluidique avec une alimentation en liquide polymérisable à travers un régulateur de pression liquide.

12. Procédé selon l'une quelconque des revendications 1 à 8, dans lequel ladite étape de remplissage est réalisée avec un bain de liquide polymérisable, et ledit orifice de respiration dans ledit support et / ou dans ledit objet est en communication fluidique avec ledit liquide polymérisable à travers un siphon interconnectant ledit bain et ledit orifice de respiration dans ledit support.

13. Procédé selon l'une quelconque des revendications précédentes, dans lequel ledit élément optiquement transparent est composé d'un polymère fluoré semi-perméable, d'un polymère rigide perméable aux gaz, d'un verre poreux ou d'une combinaison de ceux-ci.

14. Procédé selon l'une quelconque des revendications précédentes, dans lequel ladite surface de construction est fixe et stationnaire en dimensions latérales (X et Y).

15. Procédé selon l'une quelconque des revendications 1 à 11, dans lequel lesdites étapes de remplissage, d'irradiation et / ou d'avancement sont effectuées simultanément aux étapes de :
(i) maintien continu d'une zone morte de liquide polymérisable en contact avec ladite surface de construction, et
(ii) maintien continu d'un gradient de zone de polymérisation entre ladite zone morte et ledit polymère solide et en contact avec chacun de ceux-ci, ledit gradient de zone de polymérisation comprenant ledit liquide polymérisable sous forme partiellement durcie.

16. Procédé selon la revendication 15, dans lequel ledit élément optiquement transparent comprend un élément semi-perméable, et ledit maintien continu d'une zone morte est réalisé en alimentant un inhibiteur de polymérisation à travers ledit élément optiquement transparent en une quantité suffisante pour maintenir ladite zone morte et ledit gradient de polymérisation.

17. Procédé selon la revendication 15 ou 16, dans lequel ledit gradient de zone de polymérisation est maintenu pendant une durée d'au moins 5, 10, 20 ou 30 secondes, ou au moins 1 ou 2 minutes.

18. Procédé selon l'une quelconque des revendications précédentes, dans lequel :
ledit liquide polymérisable comprend un liquide polymérisable par radicaux libres et ledit inhibiteur comprend de l'oxygène ; ou
ledit liquide polymérisable comprend un liquide catalysé par un acide ou polymérisable par voie cationique, et ledit inhibiteur comprend une base.

19. Appareil pour former un objet tridimensionnel à partir d'un liquide polymérisable, comprenant :
(a) un socle ;
(b) un support associé fonctionnellement audit socle sur lequel support est formé ledit objet tridimensionnel, ledit support ayant au moins un orifice de respiration formé dans celui-ci ;
(c) un élément optiquement transparent présentant une surface de construction, avec ladite surface de construction et ledit support définissant une zone de construction entre eux ;
(d) une alimentation en polymère liquide associée fonctionnellement à ladite surface de construction et configurée de façon à apporter le polymère liquide dans ladite zone de construction pour solidification ou polymérisation ;
(e) une source de rayonnement configurée pour irradier ladite zone de construction à travers ledit élément optiquement transparent pour former un polymère solide à partir dudit liquide polymérisable ;
(f) éventuellement au moins un entraînement associé fonctionnellement soit audit élément transparent soit audit support ;
(g) un contrôleur associé fonctionnellement audit support, et / ou éventuellement audit au moins un entraînement, et à ladite source de rayonnement pour faire avancer ledit support en éloignement de ladite surface de construction pour former ledit objet tridimensionnel à partir dudit polymère solide, dans lequel :
ledit contrôleur est en outre configuré pour déplacer en va-et-vient verticalement ledit support par rapport à ladite surface de construction pour améliorer ou accélérer le remplissage de ladite zone de construction avec ledit liquide polymérisable.

20. Appareil selon la revendication 19, comprenant en outre une ligne de siphon connectée audit orifice de respiration et configurée pour interconnecter ledit orifice de respiration avec ladite alimentation en polymère liquide.

21. Appareil selon la revendication 19 ou 20, comprenant en outre :
une alimentation en liquide polymérisable en communication fluidique avec ledit orifice de respiration, et
un régulateur de pression de liquide associé fonctionnellement audit orifice de respiration et à ladite alimentation en liquide polymérisable.

22. Appareil selon l'une quelconque des revendications 19 à 21, ledit contrôleur étant en outre configuré pour former ledit objet tridimensionnel à partir dudit polymère solide tout en exécutant simultanément à ladite alimentation, audit avancement, et/ou à ladite irradiation : (i) le maintien continu d'une zone morte de liquide polymérisable en contact avec ladite surface de construction, et (ii) le maintien continu d'un gradient de zone de polymérisation entre ladite zone morte et ledit polymère solide et en contact avec chacun d'eux, ledit gradient de zone de polymérisation comprenant ledit liquide polymérisable sous forme partiellement durcie.

23. Appareil selon l'une quelconque des revendications 19 à 22, dans lequel ladite surface de construction est fixe et stationnaire en dimensions latérales (X et Y).

24. Appareil selon l'une quelconque des revendications 19 à 23, dans lequel ledit élément optiquement transparent comprend un élément semi-perméable.
